# EUROPEAN PATENT SPECIFICATION

(11) **EP 4 130 537 B1**
(45) Date of publication and mention of the grant of the patent: **01.07.2026**
(21) Application number: 21902230.8
(22) Date of filing: 20.10.2021
(51) Int. Cl.: F16L 21/00, F16L 13/02, F16L 13/007

(54) **PIPELINE CONNECTION STRUCTURE AND COMPRESSOR ASSEMBLY COMPRISING THE SAME**
LEITUNGSVERBINDUNGSSTRUKTUR, VERDICHTERANORDNUNG DAMIT
STRUCTURE DE RACCORDEMENT DE CONDUITE ET ENSEMBLE COMPRESSEUR LA COMPRENANT

(30) Priority: 07.12.2020 CN 202022914507 U; 07.12.2020 CN 202022914510 U; 14.05.2021 CN 202110526706
(43) Date of publication of application: 08.02.2023
(73) Proprietor: GD Midea Heating & Ventilating Equipment Co., Ltd., Foshan, Guangdong 528311 (CN); HEFEI MIDEA HEATING & VENTILATING EQUIPMENT CO., LTD., Boyan Science Park, High-Tech Zone, Hefei Anhui 230088 (CN)
(72) Inventor: CUI, Yuanbo, Foshan, Guangdong 528311 (CN); ZHANG, Tiegang, Foshan, Guangdong 528311 (CN); WU, Yandong, Foshan, Guangdong 528311 (CN); WANG, Mingren, Foshan, Guangdong 528311 (CN); CUI, Chunlei, Foshan, Guangdong 528311 (CN); LAO, Tongbing, Foshan, Guangdong 528311 (CN)
(74) Representative: Treeby, Philip David William
(86) International application number: PCT/CN2021/125014
(87) International publication number: WO 2022/121523

(56) References cited:
- CN-A- 104 806 824
- CN-A- 106 917 924
- CN-U- 204 226 888
- CN-U- 204 226 888
- CN-U- 205 781 506
- CN-U- 211 925 062
- CN-U- 211 925 062
- CN-U- 213 809 293
- CN-U- 213 809 293
- CN-U- 213 809 308
- CN-U- 213 809 308
- US-A1- 2010 139 802
- US-A1- 2016 312 923

## Description

### FIELD

The present disclosure relates to the field of electrical appliance manufacturing technology, and more particularly, to a pipeline connection structure, a compressor assembly, and an air conditioner.

### BACKGROUND

In the related art, an air conditioner is internally provided with a plurality of pipelines, and a refrigerant circulates in the pipelines and performs heat exchange during the circulation, to realize cooling or heating of the air conditioner. However, there are two problems in terms of connecting the plurality of pipelines.

The first problem lies in different materials of steel pipes and connecting pipes. The strength of the steel pipes is much greater than that of the connecting pipes, when the steel pipes and the connecting pipes have the same specification. The thermal conductivity of the steel pipes is different from that of the connecting pipes. During welding, the steel pipes are easily subjected to uneven heating, resulting in cracking or decrease in strength due to thermal stress. In order to ensure the feasibility and convenience of on-site welding, a connection sleeves and a steel pipe are generally pre-welded as one piece, and it is only necessary to weld the connection sleeves or weld the connection sleeve to the steel pipe on a workshop site. However, there are various welding defects in the existing pipeline connection structures.

The second problem occurs in a connection process. In order to make adjacent pipelines (abutting against each other or spaced apart from each other) butted, a connection sleeve is on an outer side of a butting position of the adjacent pipelines, and then the connection sleeve is fitted with the adjacent pipelines separately. However, there is no overlapping section between the adjacent pipelines, resulting in weakness at the connection position and easy breakage and leakage. CN204226888U relates generally to a pipeline connection assembly for an air conditioner. US2016312923A1 relates generally to a copper and steel composite pipe to enhance the welding performance between a copper pipe and a steel pipe. CN205781506U relates generally to a four-way reversing valve provided with the connecting pipe. CN211925062U relates generally to a stainless steel pipe and copper pipe welding structure.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present disclosure seeks to solve at least one of the problems existing in the related art.

To this end, a first objective of the present disclosure is to provide a pipeline connection structure.

A second objective of the present disclosure is to provide a compressor assembly.

A third objective of the present disclosure is to provide an air conditioner.

A pipeline connection structure according to embodiments of the present disclosure includes a first pipe body and a second pipe body; and a connection sleeve assembly fitted inside or outside the first pipe body, and fitted outside the second pipe body, in which the connection sleeve assembly is fixedly connected to the first pipe body and the second pipe body to make the first pipe body be in communication with the second pipe body.

For the pipeline connection structure according to embodiments of the present disclosure, with the connection sleeve assembly, the strength at the joint of the pipeline connection structure is enhanced, risks of pipeline breakage and leakage are reduced, and the reliability of the pipeline connection structure is improved.

In some embodiments, the first pipe body is a first steel pipe, and the second pipe body is a second steel pipe; the connection sleeve assembly includes a first copper sleeve and a second copper sleeve; the first steel pipe includes an upper section of the first steel pipe and a lower section of the first steel pipe, and the second steel pipe includes an upper section of the second steel pipe and a lower section of the second steel pipe; the first copper sleeve includes an upper section of the first copper sleeve and a lower section of the first copper sleeve, and the second copper sleeve includes an upper section of the second copper sleeve and a lower section of the second copper sleeve; the first copper sleeve is fitted over the upper section of the first copper sleeve, and the upper section of the first copper sleeve extends beyond the upper section of the first steel pipe to form a first extension section; the second copper sleeve is fitted over the lower section of the second steel pipe; the first steel pipe is welded with the first copper sleeve, and the second steel pipe is welded with the second copper sleeve; and the first extension section of the first copper sleeve is fitted over the second copper sleeve and is welded with the second copper sleeve.

In some embodiments, the lower section of the second copper sleeve extends beyond the lower section of the second steel pipe to form a second extension section or is flush with the lower section of the second steel pipe; and the upper section of the second copper sleeve extends from the upper section of the first copper sleeve by a predetermined length.

In some embodiments, the first steel pipe or the first copper sleeve is a pipe with a constant diameter or a pipe with a variable diameter.

In some embodiments, an end face of the lower section of the second copper sleeve abuts against or is spaced from an end face of the upper section of the first steel pipe.

In some embodiments, the lower section of the second copper sleeve extends into the first steel pipe.

In some embodiments, an inner wall of the first steel pipe includes a positioning protrusion for stopping the lower section of the second copper sleeve.

In some embodiments, the upper section of the first steel pipe is flared or necked.

In some embodiments, the first pipe body is a copper pipe or a copper-plated pipe, the second pipe body is a steel pipe, and the connection sleeve assembly is a third copper sleeve; and the third copper sleeve is fitted over the lower section of the second pipe body and is welded with the second pipe body, and the upper section of the first pipe body is fitted over the third copper sleeve and is welded with the third copper sleeve.

In some embodiments, the upper section of the third copper sleeve extends out from the lower section of the second pipe body; the upper section of the first pipe body is expands to form a transition section; and a filter pressure ring is arranged between the lower section of the second pipe body and the transition section of the first pipe body.

In some embodiments, the first pipe body has a receiving end, the second pipe body has an insertion end, and the insertion end is inserted into the receiving end; and the connection sleeve assembly is fitted over a connection position between the first pipe body and the second pipe body, and is fixedly connected to an outer surface of the receiving end and an outer surface of the second pipe body.

In some embodiments, the connection sleeve assembly includes: a first connection sleeve fitted over the receiving end and protruding from an end portion of the receiving end; and a second connection sleeve fitted over the second pipe body. An end portion of the insertion end protrudes from a first end of the second connection sleeve, the second connection sleeve is at least partially inserted in the first connection sleeve, and the first connection sleeve is fixedly connected with the second connection sleeve.

In some embodiments, the first end of the second connection sleeve abuts against the end portion of the receiving end.

In some embodiments, a protruding length of the end portion of the insertion end from the second connection sleeve is greater than or equal to 10 mm.

In some embodiments, the first pipe body has a receiving end, the second pipe body has an insertion end, and the insertion end is inserted into the receiving end; and the connection sleeve assembly includes: a first connection sleeve inserted in and fixedly connected to the receiving end; and a second connection sleeve fitted over and fixedly connected to the insertion end, in which the first connection sleeve is fitted over and fixedly connected to the second connection sleeve.

In some embodiments, the first connection sleeve protrudes from an end portion of the receiving end.

In some embodiments, the second connection sleeve is at least partially inserted in the first connection sleeve.

In some embodiments, a second end of the second connection sleeve protrudes from the first connection sleeve.

In some embodiments, a protruding length of the second end of the second connection sleeve from the first connection sleeve is greater than or equal to 5 mm.

In some embodiments, a protruding length of an end of the first connection sleeve from the receiving end is greater than or equal to 5 mm.

In some embodiments, a protruding length of the end portion of the insertion end from the second connection sleeve is greater than or equal to 10 mm.

In some embodiments, materials of the first pipe body and the first connection sleeve are different, and/or materials of the second pipe body and the second connection sleeve are different.

In some embodiments, the first connection sleeve and the second connection sleeve are made of copper or copper alloy.

In some embodiments, the first pipe body and the second pipe body are stainless steel pipes.

A compressor assembly according to embodiments of the present disclosure includes a compressor and the pipeline connection structure in any one of the above embodiments.

The compressor assembly according to embodiments of the present disclosure has the advantage of high connection strength.

An air conditioner according to embodiments of the present disclosure includes the compressor assembly in any one of the above embodiments.

The air conditioner according to embodiments of the present disclosure has the advantage of high structural strength.

### BRIEF DESCRIPTION OF DRAWINGS

Figs. 1-5 are schematic diagrams of a pipeline connection structure in related art.
Fig. 6 is a schematic diagram of a first pipe body and a first connection sleeve in a pipeline connection structure according to embodiments of a first aspect of the present disclosure.
Fig. 7 is a schematic diagram of a first pipe body and a first connection sleeve in a first pipeline connection structure according to embodiments of the first aspect of the present disclosure.
Fig. 8 is a schematic diagram of a first pipe body and a first connection sleeve in a second pipeline connection structure according to embodiments of the first aspect of the present disclosure.
Fig. 9 is a schematic diagram of a second pipe body and a second connection sleeve in the first pipeline connection structure according to embodiments of the first aspect of the present disclosure.
Fig. 10 is a schematic diagram of a second pipe body and a second connection sleeve in the second pipeline connection structure according to embodiments of the first aspect of the present disclosure.
Fig. 11 is a schematic diagram of a pipeline connection structure according to embodiments of the first aspect of the present disclosure.
Fig. 12 is a schematic diagram of another pipeline connection structure according to embodiments of the first aspect of the present disclosure.
Fig. 13 is a schematic diagram of still another pipeline connection structure according to the invention.
Fig. 14 is a schematic diagram of yet another pipeline connection structure according to embodiments of the first aspect of the present disclosure.
Fig. 15 is a schematic diagram of a pipeline connection structure according to an embodiment of the second aspect of the present disclosure.
Fig. 16 is a schematic diagram of a pipeline connection structure according to embodiments of a third aspect of the present disclosure.
Fig. 17 is an exploded view of the pipeline connection structure shown in Fig. 16.
Fig. 18 is a schematic diagram of another pipeline connection structure according to embodiments of the third aspect of the present disclosure.
Fig. 19 is an exploded view of the pipeline connection structure shown in Fig. 18.
Fig. 20 is a schematic diagram of still another pipeline connection structure according to embodiments of the third aspect of the present disclosure.
Fig. 21 is an exploded view of the pipeline connection structure shown in Fig. 20.
Fig. 22 is a schematic diagram of a pipeline connection structure according to embodiments of a fourth aspect of the present disclosure.
Fig. 23 is an exploded view of the pipeline connection structure shown in Fig. 22.
Fig. 24 is a schematic diagram of another pipeline connection structure according to embodiments of the fourth aspect of the present disclosure.
Fig. 25 is an exploded view of the pipeline connection structure shown in Fig. 24.
Fig. 26 is a schematic diagram of still another pipeline connection structure according to embodiments of the fourth aspect of the present disclosure.
Fig. 27 is an exploded view of the pipeline connection structure shown in Fig. 26.

Reference numerals:
pipeline connection structure 100;
11, first steel pipe; 11A, upper section of first steel pipe; 11B, lower section of first pipe; 111, positioning protrusion;
12, first copper sleeve; 12A, upper section of first copper sleeve; 12B, lower section of first copper sleeve;
21, second steel pipe; 21A, upper section of second steel pipe; 21B, lower section of second steel pipe;
22, second copper sleeve; 22A, upper section of second copper sleeve; 22B, lower section of second copper sleeve;
pipeline connection structure 200; first pipe body 210; receiving end 211; second pipe body 220; insertion end 221; connection sleeve assembly 230; first connection sleeve 231; second connection sleeve 232;
pipeline connection structure 300; first pipe body 310; receiving end 311; second pipe body 320; insertion end 321; connection sleeve assembly 330; first connection sleeve 331; second connection sleeve 332;
pipeline connection structure 400; first pipe body 41; second pipe body 42; lower section of second pipe body 421; third copper sleeve 43; filter pressure ring 44.

### DETAILED DESCRIPTION

Embodiments of the present disclosure will be described below in detail, and examples of the embodiments are illustrated in the accompanying drawings. The embodiments described below with reference to the accompanying drawings are exemplary and are intended to explain the present disclosure rather than limit the present disclosure. In the specification of the present disclosure, it is to be understood that terms such as "central," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential" and the like should be construed to refer to orientations or positions as then described or as shown in the drawings under discussion. These relative terms are for convenience of description and do not indicate or imply that the device or element referred to must have a particular orientation or be constructed or operated in a particular orientation. Thus, these terms shall not be construed as limitations on the present disclosure.

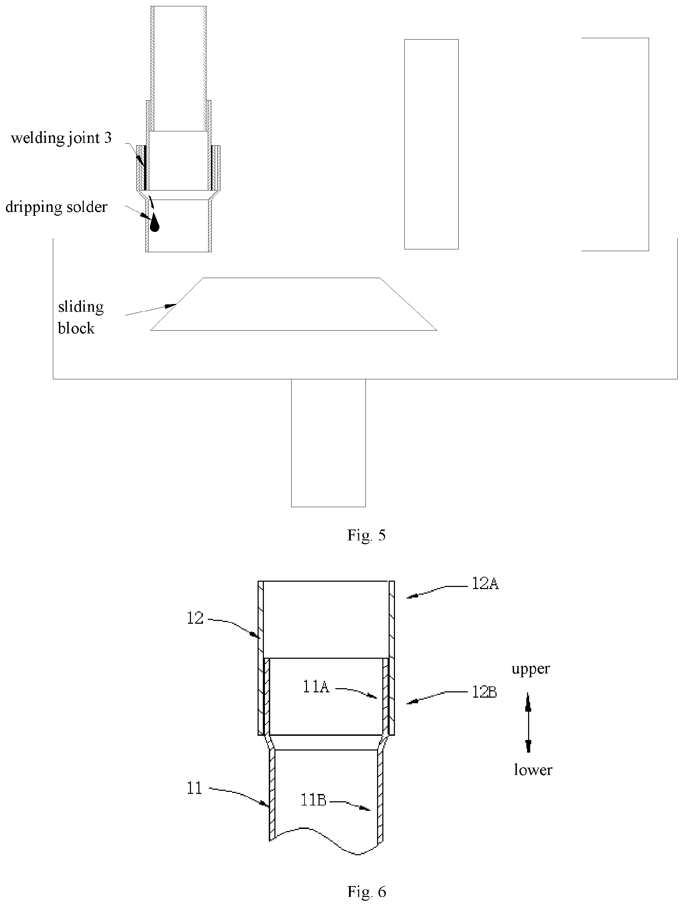

As shown in Figs. 6-27, a pipeline connection structure according to embodiments of the present disclosure includes a first pipe body, a second pipe body, and a connection sleeve assembly. The connection sleeve assembly is fitted inside or outside the first pipe body, and the connection sleeve assembly is fitted outside the second pipe body. The connection sleeve assembly is fixedly connected to the first pipe body and the second pipe body to make the first pipe body be in communication with the second pipe body.

In the pipeline connection structure according to embodiments of the present disclosure, the first pipe body and the second pipe body are connected together by the connection sleeve assembly, which enhances strength at a joint of the pipeline connection structure, reduces risks of pipeline breakage and leakage, and improves the reliability of the pipeline connection structure.

The pipeline connection structure according to the present disclosure includes embodiments of four aspects.

A pipeline connection structure 100 according to embodiments of a first aspect the present disclosure will be described below with reference to Figs. 6-14.

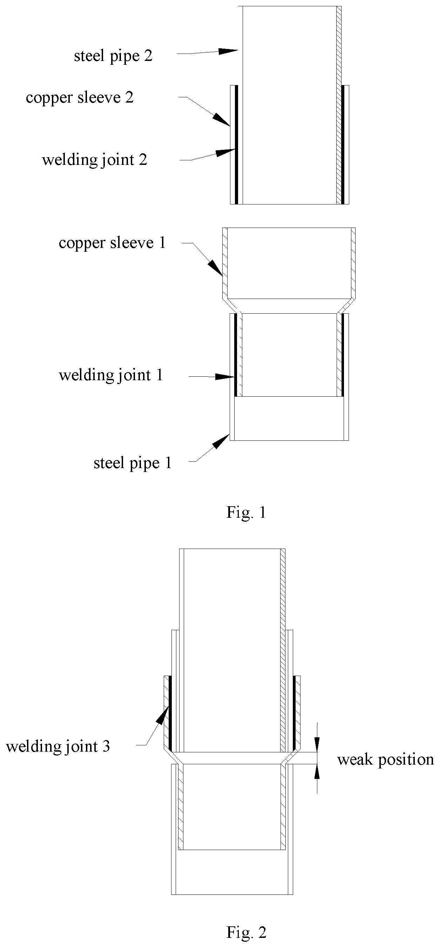

In the related art, in a pipeline connection structure shown in Fig. 1 and Fig. 2, one copper sleeve is welded on an outer side of an end of one steel pipe, another copper sleeve is welded inside another steel pipe, and the two cooper sleeves are welded during connection. If a flared or necked copper sleeve is adopted during welding, a transition zone of the flared or necked copper sleeve is close to a weld joint, and under the dual influence of welding heat and high-speed flame, grains at the weld joint become larger and thermal stress exist after welding, which leads to a decrease in strength and makes joint become a weak point.

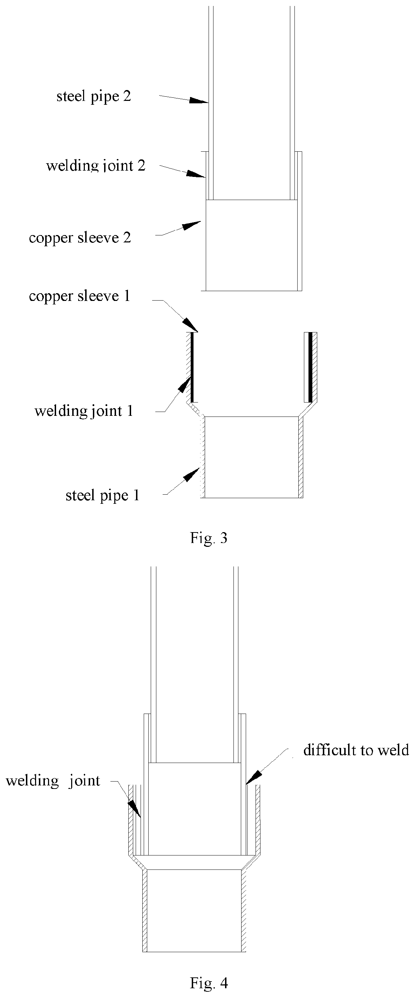

As shown in Fig. 3 and Fig. 4, if a cooper sleeve with a flush port is adopted, a temperature state of the copper sleeve during welding is not easy to observe, and solder is difficult to adhere to the weld joint, which may easily lead to over-burning of the weld joint, affecting the strength at the weld joint of the copper sleeve and the steel pipe, such that leakage may occur at the weld joint. In addition, the steel pipe with its outer layer exposed to flame of a welding gun tends to crack and lose its strength under in the case of uneven heating, and is greatly affected by the welding level, which may have poor welding consistency. The outer layer of the steel pipe turns black after being heated and contrasts with a color of a substrate.

As shown in Fig. 5, the difference in melting point between copper and steel is so great that during flame welding, excess solder drips onto an inner wall of the steel pipe and slides off like water droplets. The sliding solder may get into parts such as four-way valves and easily lead to seizure of internal sliding parts or abnormal sounds.

As shown in Figs. 6-10, the pipeline connection structure according to embodiments of the first aspect the present disclosure includes a first steel pipe 11, a first copper sleeve 12, a second steel pipe 21, and a second steel sleeve 22. The first steel pipe 11 has an upper section 11A and a lower section 11B. The second steel pipe 21 has a lower section 21B and an upper section 21A. The first copper sleeve 12 has an upper section 12A and a lower section 12B. The second copper sleeve 22 has a lower section 22B and an upper section 22A.

As shown in Figs. 6-8, the first copper sleeve 12 is fitted over an outer peripheral surface of the upper section 11A of the first steel pipe. In the figures, the upper section 12A of the first copper sleeve is located above, and the lower section 12B of the first copper sleeve is located below; the upper section 11A of the first steel pipe is located above, and the lower section 11B of the first steel pipe is located below; and the upper section 12A of the first copper sleeve extends beyond the upper section 11A of the first steel pipe to form a first extension section.

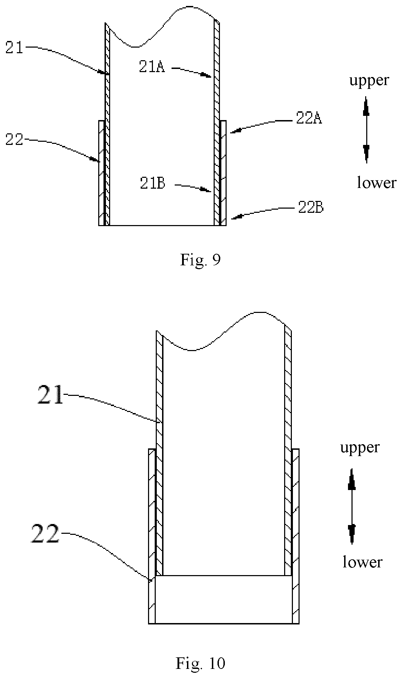

As shown in Figs. 9-10, the second copper sleeve is fitted over the lower section 21B of the second steel pipe.

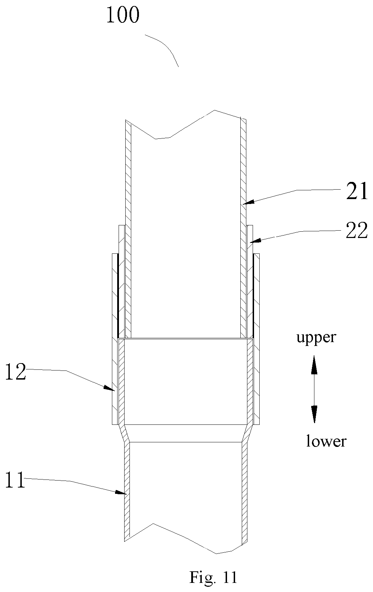

As shown in Figs. 11-14, the first steel pipe 11 is integrally welded with the first copper sleeve; the second steel pipe 21 is integrally welded with the second copper sleeve 22; and the first extension section of the first copper sleeve 12 is fitted over the second copper sleeve 22 and welded with the second copper sleeve 22.

For the pipeline connection structure according to embodiments of the first aspect the present disclosure, with the reasonable positional relationship of the first steel pipe 11, the first copper sleeve 12, the second steel pipe 21, and the second copper sleeve 22, the first copper sleeve 12 and the second copper sleeve 22 are both arranged outside the steel pipes, and defects such as poor thermal conductivity and cracking caused by uneven heating of steel pipes can be avoided. In addition, since the first copper sleeve 12 is arranged outside the first steel pipe 11, the thickness of the first copper sleeve 12 is not limited, the strength at a joint of the pipeline connection structure is enhanced, risks of pipeline breakage and leakage are reduced, and the reliability of the pipeline connection structure is improved.

In some embodiments, as shown in Figs. 9-10, the lower section 22B of the second copper sleeve is located below, and the upper section 22A of the second copper sleeve is located above; the lower section 21B of the second steel pipe is located below, and the upper section 21A of the second steel pipe is located above. As shown in Fig. 9, the lower section 22B of the second copper sleeve is flush with the lower section 21B of the second steel pipe. Alternatively, as shown in Fig. 10, the lower section 22B of the second copper sleeve extends beyond the lower section 21B of the second steel pipe to form a second extension section. The upper section 22A of the second copper sleeve extends from the upper section 12A of the first copper sleeve by a predetermined length.

The lower section 22B of the second copper sleeve extends beyond the lower section 21B of the second steel pipe, which can have a large depth of fusion of the solder and good sealing performance, and avoid the problem of excessive solder dripping, compared with another situation that the lower section 22B of the second copper sleeve is flush with the lower section 21B of the second steel pipe.

Further, the predetermined length is 15-25 mm. The first extension section has a length of 8-12 mm. Thus, it can be ensured that the upper section 22A of the second copper sleeve can exceed the upper section 12A of the first copper sleeve, avoiding a cavity formed in the upper section 12A of the first copper sleeve, and diminishing the strength at the joint. At the same time, the upper section 22A of the second copper sleeve can protect the lower section 21B of the second steel pipe, and prevents the solder from dripping on the lower section 21B of the second steel pipe, which may otherwise diminish the strength of the lower section 21B of the second steel pipe.

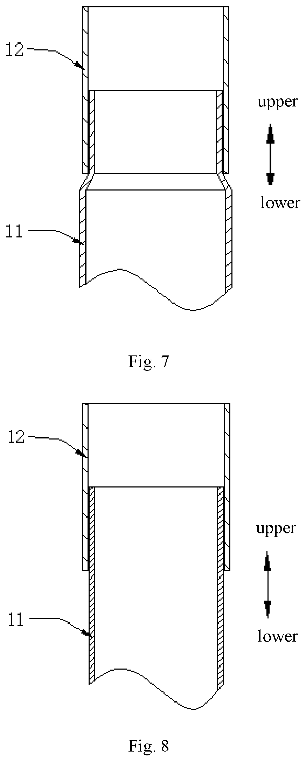

In some embodiments, as shown in Fig. 6 and Fig. 7, the first steel pipe 11 or the first copper sleeve 22 is a pipe with a constant diameter or a pipe with a variable diameter. Thus, the connection mode can be adjusted in the light of actual working conditions.

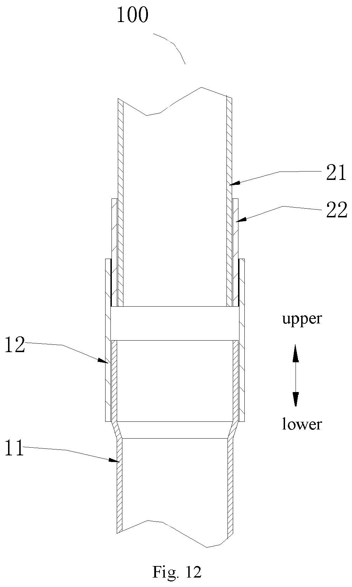

In some embodiments, as shown in Fig. 10, an end face of the lower section 22B of the second copper sleeve abuts against an end face of the upper section 11A of the first steel pipe; alternatively, as shown in Fig. 11 and Fig. 12, the end face of the lower section 22B of the second copper sleeve is separated from the end face of the upper section 11A of the first steel pipe by a predetermined distance. Thus, the connection mode can be adjusted in the light of actual working conditions.

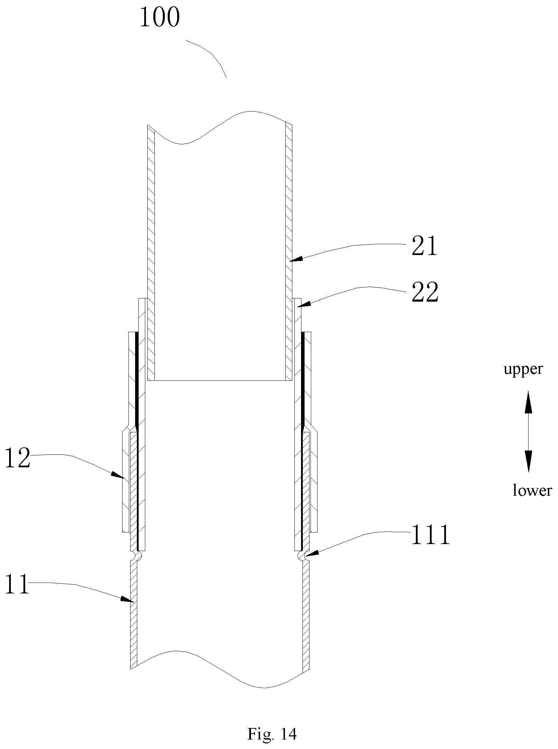

In some embodiments, as shown in Fig. 14, the lower section 22B of the second copper sleeve extends into the first steel pipe 11. Thus, this structure can form multi-layer protection and strengthen the structural strength at the joint.

Further, when the lower section 22B of the second copper sleeve extends into the first steel pipe 11, an inner wall of the first steel pipe 11 is provided with a positioning protrusion 111 for stopping the lower section 22B of the second copper sleeve, in order to ensure the relative positions of the second copper sleeve 22 and the first steel pipe 11. The lower section 22B of the second copper sleeve extends into the first steel pipe 11 and gradually extends until the end face of the lower section 22B of the second copper sleeve comes into contact with the positioning protrusion 111 on the inner wall of the first steel pipe 11, so that the second copper sleeve 22 cannot continue to extend, which ensures the relative positions of the second copper sleeve 22 and the first steel pipe 11.

In some embodiments, as shown in Fig. 6 and Fig. 7, the upper section 11A of the first steel pipe is enlarged or narrowed. Since the upper section 11A of the first steel pipe is provided with a flare or a neck, influence of a welding area on the lower section 11B of the first steel pipe can be reduced.

Alternatively, as shown in Fig. 8, a radial dimension of the upper section 11A of the first steel pipe is uniform. The uniform dimension can save material processing costs compared with the flared and necked dimensions.

The pipeline connection structure according to embodiments of the first aspect of the present disclosure will be described below with reference to Figs. 6-16. The pipeline connection structure according to embodiments of the first aspect of the present disclosure includes at least four embodiments. It can be understood that the following description is merely illustrative and is not intended to specifically limit the present disclosure.

### Embodiment I

In this embodiment, as shown in Fig. 11, the pipeline connection structure includes a first steel pipe 11, a first copper sleeve 12, a second steel pipe 21, and a second copper sleeve 22. The first steel pipe 11 has an upper section 11A of the first steel pipe and a lower section 11B of the first steel pipe. The second steel pipe 21 has a lower section 21B of the second steel pipe and an upper section 21A of the second steel pipe. The first copper sleeve 12 has an upper section 12A of the first copper sleeve and a lower section 12B of the first copper sleeve. The second copper sleeve 22 has a lower section 22B of the second copper sleeve and an upper section 22A of the second copper sleeve. The first copper sleeve 12 is fitted over the upper section 11A of the first steel pipe. In the figure, the upper section 12A of the first copper sleeve is located above, and the lower section 12B of the first copper sleeve is located below; the upper section 11A of the first steel pipe is located above, and the lower section 11B of the first steel pipe is located below; and the upper section 12A of the first copper sleeve extends beyond the upper section 11A of the first steel pipe to form a first extension section. The second copper sleeve 22 is fitted over the lower section 21B of the second steel pipe. The first steel pipe 11 and the first copper sleeve 12 are welded as one piece; the second steel pipe 21 and the second copper sleeve 22 are welded as one piece; and the first extension section of the first copper sleeve 12 is fitted over the second copper sleeve 22 and is weld with the second copper sleeve 22.

The upper section 11A of the first steel pipe flares out, and an inner diameter of the first copper sleeve 12 is equal to an outer diameter of the upper section 11A of the first steel pipe. The lower section 22B of the second copper sleeve is flush with the lower section 21B of the second steel pipe. An end face of the lower section 22B of the second copper sleeve abuts against an end face of the upper section 11A of the first steel pipe. The first extension section of the first copper sleeve 12 dose not completely cover the second copper sleeve 22, such that the upper section 22A of the second copper sleeve extends from the upper section 12A of the first copper sleeve by a predetermined length. The connection mode in this embodiment enhances the strength at the joint of the pipeline connection structure, reduces risk of pipeline breakage and leakage, and improves the reliability of the pipeline connection structure.

### Embodiment II

As shown in Fig. 12, this embodiment differs from Embodiment I in that there is a certain distance between the end face of the lower section 22B of the second copper sleeve and the end face of the upper section 11A of the first steel pipe. The rest is the same as in Embodiment I and will not be repeated here.

In this embodiment, the end face of the lower section 22B of the second copper sleeve is at a certain distance from the end face of the upper section 11A of the first steel pipe, which may be applied to situations where an axial length of a connection part is large.

### Embodiment III

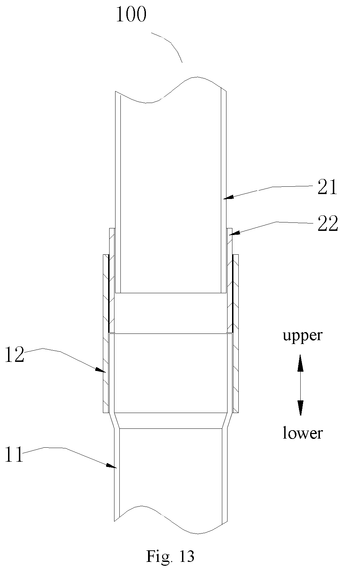

As shown in Fig. 13, this embodiment, according to the invention, differs from Embodiment I in that the lower section 22B of the second copper sleeve extends beyond the lower section 21B of the second steel pipe to form a second extension section, and an end face of the second extension section abuts against the end face of the upper section 11A of the first steel pipe. The rest is the same as in Embodiment I and will not be repeated here.

In Embodiment III, with a certain distance between the first steel pipe 11 and the second steel pipe 21, the solder has a large depth of fusion of the solder and good sealing performance, which can avoid the problem of excessive solder dripping.

### Embodiment IV

In this embodiment, as shown in Fig. 14, the pipeline connection structure includes a first steel pipe 11, a first copper sleeve 12, a second steel pipe 21, and a second copper sleeve 22. The first steel pipe 11 has an upper section 11A of the first steel pipe and a lower section 11B of the first steel pipe. The second steel pipe 21 has a lower section 21B of the second steel pipe and an upper section 21A of the second steel pipe. The first copper sleeve 12 has an upper section 12A of the first copper sleeve and a lower section 12B of the first copper sleeve. The second copper sleeve 22 has a lower section 22B of the second copper sleeve and an upper section 22A of the second copper sleeve. The first copper sleeve 12 is fitted over the upper section 11A of the first steel pipe. In the figure, the upper section 12A of the first copper sleeve is located above, and the lower section 12B of the first copper sleeve is located below; the upper section 11A of the first steel pipe is located above, and the lower section 11B of the first steel pipe is located below; and the upper section 12A of the first copper sleeve extends beyond the upper section 11A of the first steel pipe to form a first extension section. The second copper sleeve 22 is fitted over the lower section 21B of the second steel pipe. The first steel pipe 11 and the first copper sleeve 12 are welded as one piece; the second steel pipe 21 and the second copper sleeve 22 are welded as one piece; and the first extension section of the first copper sleeve 12 is fitted over the second copper sleeve 22 and is weld with the second copper sleeve 22.

The upper section 11A of the first steel pipe and the lower section 11B of the first steel pipe have the same dimension. An inner diameter of the lower section 12B of the first copper sleeve is equal to an outer diameter of the first steel pipe 11. An inner diameter of the upper section 12A of the first copper sleeve is less than the inner diameter of the lower section 12B of the first copper sleeve and is equal to an outer diameter of the second copper sleeve 22. The lower section 22B of the second copper sleeve has the same dimension as the upper section 22A of the second copper sleeve. The lower section 21B of the second steel pipe and the upper section 21A of the second steel pipe have the same dimension.

An end face of the upper section 11A of the first steel pipe is located at a dimension-changing part between the upper section 12A of the first copper sleeve and the lower section 12B of the second copper sleeve. An inner wall of the first steel pipe 11 has a positioning protrusion 111 for stopping the lower section 22B of the second copper sleeve. The lower section 22B of the second copper sleeve extends into the first steel pipe 11 and allows for contact between an end face of the lower section 22B of the second copper sleeve and the positioning protrusion 111 on the inner wall of the first steel pipe 11. The first extension section of the first copper sleeve 12 does not completely cover the second copper sleeve 22, such that the upper section 22A of the second copper sleeve extends form the upper section 12A of the first copper sleeve by a predetermined length.

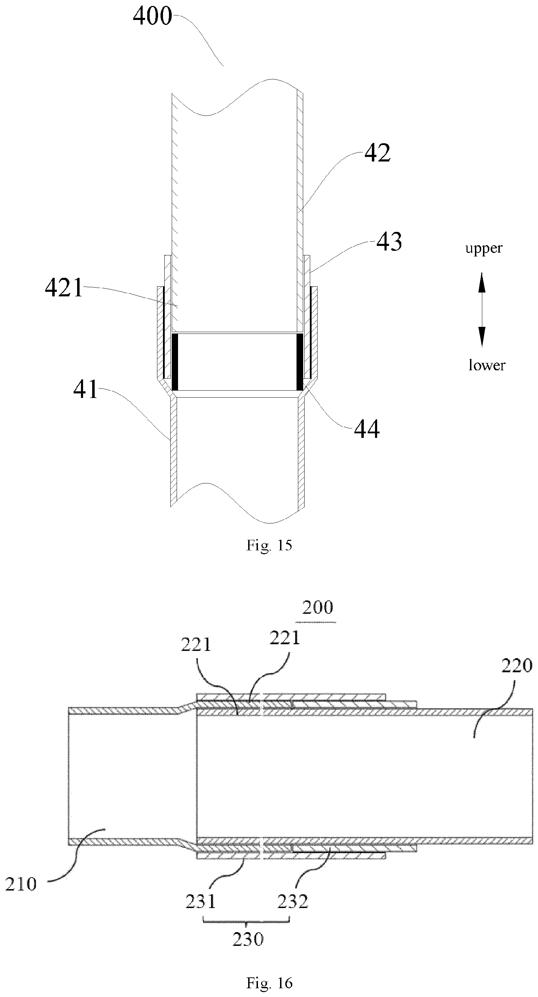

A pipeline connection structure 400 according to embodiments of a second aspect of the present disclosure will be described below with reference to Fig. 15.

As shown in Fig. 15, the pipeline connection structure 400 according to embodiments of a fourth aspect of the present disclosure includes a first pipe body 41, a second pipe body 42, and a third copper sleeve 43. The first pipe body 41 is a copper pipe or a copper-plated pipe. The second pipe body 42 is a steel pipe. The third copper sleeve 43 is fitted over a lower section 421 of the second pipe body and is welded with the second pipe body 42. An upper section of the first pipe body 41 is fitted over the third copper sleeve 43 and is welded with the third copper sleeve 43. Thus, one copper sleeve is used to connect two steel pipes, which can reduce processing steps and save raw materials.

For the pipeline connection structure 400 according to the embodiments of the present disclosure, by arranging the third copper sleeve 43 at a junction of the first pipe body 41 and the second pipe body 42, the strength of the pipeline connection structure 400 at the junction is enhanced, risks of pipeline breakage and leakage are reduced, and the reliability of the pipeline connection structure 400 is improved.

In some embodiments, a lower section of the third copper sleeve 43 extends out from the lower section 421 of the second pipe body; the upper section of the first pipe body 41 expands to form a transition section; and a filter pressure ring 44 is arranged between the lower section 421 of the second pipe body and the transition section of the first pipe body 41. For the pipeline connection structure 400 according to the embodiments of the present disclosure, the filter pressure ring 44 may be used in conjunction with an air return pipe filter in a compressor, to prevent the solder from falling into the compressor.

### Embodiment V

In this embodiment, as shown in Fig. 16, the pipeline connection structure includes a first pipe body 41, a second pipe body 42, and a third copper sleeve 43. The first pipe body 41 is a copper pipe or a copper-plated pipe. The second pipe body 42 is a steel pipe. The third copper sleeve 43 is fitted over a lower section 421 of the second pipe body and is welded with the second pipe body 42. An upper section of the first pipe body 41 is fitted over the third copper sleeve 43 and is welded with the third copper sleeve 43. A lower section of the third copper sleeve 43 extends out from the lower section 421 of the second pipe body. The upper section of the first pipe body 41 expands to form a transition section. A filter pressure ring 44 is arranged between the lower section 421 of the second pipe body and the transition section of the first pipe body 41.

In this embodiment, the arrangement of the filter pressure ring 44 can prevent the solder from falling into the compressor.

A pipeline connection structure 200 according to embodiments of a third aspect of the present disclosure will be described below with reference to Figs. 16-21.

As shown in Figs. 16-21, the pipeline connection structure 200 according to the embodiments of the present disclosure includes a first pipe body 210, a second pipe body 220, and a connection sleeve assembly 230. The first pipe body 210 has a receiving end 211. The second pipe body 220 has an insertion end 221, and the insertion end 221 is inserted into the receiving end 211. The connection sleeve assembly 230 is fitted over a joint of the first pipe body 210 and the second pipe body 220. The connection sleeve assembly 230 is fixedly connected to an outer surface of the receiving end 211 and an outer surface of the second pipe body 220.

For the pipeline connection structure 200 according to the present disclosure, during connection of the pipeline connection structure 200, the insertion end 221 of the second pipe body 220 is inserted into the receiving end 211 of the first pipe body 210, and the connection sleeve assembly 230 is arranged outside the joint of the first pipe body 210 and the second pipe body 220. Since the connection sleeve assembly 230 is fitted with the first pipe body 210 and the second pipe body 220, the connection and fixation between the first pipe body 210 and the second pipe body 220 can be realized. Since the insertion end 221 of the second pipe body 220 is inserted into the receiving end 211 of the first pipe body 210, the first pipe body 210 and the second pipe body 220 overlap at a connection position and are fixedly connected through the connection sleeve assembly 230. Thus, the connection strength of the pipeline connection structure 200 is improved, and the situation that the breakage and leakage occurs at the connection position of the pipeline connection structure 200 is avoided.

It should be understood that the first pipe body 210 and the second pipe body 220 are both circular pipes, and an inner diameter of the insertion end 221 is slightly smaller than an outer diameter of the receiving end 211. When the insertion end 221 is inserted into the receiving end 211, an outer surface of the insertion end 221 abuts against an inner wall of the receiving end 211, so that a gap between them is reduced, and they are connected and fixed by the connection sleeve assembly 230, further ensuring the strength of connection between the first pipe body 210 and the second pipe body 220, and avoiding the situation that the breakage and leakage occurs at the connection position.

It should be noted that when the pipeline connection structure 200 according to the present disclosure is applied to an air conditioner, the pipeline connection structure 200 may include more than one first pipe body 210 and more than one second pipe body 220, that is, may be formed by a plurality of the first pipe bodies 210 and a plurality of the second pipe bodies 220. The first pipe body 210 is on one side of the connection position, the second pipe body 220 is located on the other side of the connection position, and the two are connected and fixed by the connection sleeve assembly 230.

Additionally, in some embodiments, the receiving end 211 is arranged on the second pipe body 220, and the insertion end 221 is arranged on the first pipe body 210. The connection structure of this embodiment is arranged in a mirroring manner with other embodiments of the present disclosure, which can refer to the embodiments in the present disclosure for detail.

Furthermore, a sealing structure is provided at a position where the connection sleeve assembly 230 and the first pipe body 210 are fixedly connected, and another sealing structure is provided at a position where the connection sleeve assembly 230 and the second pipe body 220 are fixedly connected, such that the sealing performance at the connection position of the first pipe body 210 and the second pipe body 220 is ensured, and the leakage at the connection position is avoided.

It should be further understood that, as shown in Figs. 16-21, the connection sleeve assembly 230 includes a first connection sleeve 231 and a second connection sleeve 232. The first connection sleeve 231 is fitted over the receiving end 211 and protrudes from an end face of the receiving end 211. The second connection sleeve 232 is fitted over the second pipe body 220, and an end face of the insertion end 221 protrudes from an end face of the second connection sleeve 232. The second connection sleeve 232 is at least partially inserted into the first connection sleeve 231, and the first connection sleeve 231 is fixedly connected with the second connection sleeve 232. Specifically, the first connection sleeve 231 is mounted outside and fixedly connected to the receiving end 211, and the second connection sleeve 232 is fitted over and fixedly connected to the second pipe body 220. During the connection of the first pipe body 210 with the second pipe body 220, the insertion end 221 is inserted into the receiving end 211; at least a part of a body of the second connection sleeve 232 is inserted into a body of the first connection sleeve 231 protruding beyond the receiving end 211; and the first connection sleeve 231 and the second connection sleeve 232 are fixedly connected, realizing the connection between the first pipe body 210 and the second pipe body 220.

By inserting the insertion end 221 into the receiving end 211, there is an overlapping section at the connection position between the first pipe body 210 and the second pipe body 220, and by inserting at least a part of the second connection sleeve into the first connection sleeve 231, there is also an overlapping section between the first connection sleeve 231 and the second connection sleeve 232. Through the arrangement of the first pipe body 210, the second pipe body 220, the first connection sleeve 231, and the second connection sleeve 232, the connection strength at the connection position of the pipeline connection structure 200 is further improved, and the situation that the breakage or leakage occurs at the connection position of the pipeline connection structure 200 is effectively avoided.

It should be understood that the first pipe body 210 and the second pipe body 220 are both circular pipes, the first connection sleeve 231 and the second connection sleeve 232 are both circular sleeves, and the outer diameter of the receiving end 211 is slightly smaller than an inner diameter of the first connection sleeve 231. When the first connection sleeve 231 is fitted over the receiving end 211, an outer surface of the receiving end 211 abuts against an inner wall of the first connection sleeve 231, such that a gap between the two is reduced, avoiding a problem of shaking caused by a large gap between them. In addition, an inner diameter of the second connection sleeve 232 is slightly larger than an outer diameter of the second pipe body 220. When the second connection sleeve 232 is fitted over the second pipe body 220, an inner wall of the second connection sleeve 232 abuts against an outer surface of the second pipe body 220, such that a gap between the two is reduced, avoiding a problem of shaking caused by a large gap between them. Furthermore, an outer diameter of the second connection sleeve 232 is slightly smaller than the inner diameter of the first connection sleeve 231, such that a gap between the first connection sleeve 231 and the second connection sleeve 232 is reduced, avoiding the shaking caused by a large gap at the connection position of the first connection sleeve 231 and the second connection sleeve 232, and further improving the strength at the connection position of the pipeline connection structure 200.

It should be noted that the receiving end 211 is connected with the first connection sleeve 231 in a sealing manner, the second connection sleeve 232 is connected with the second pipe body 220 in a sealing manner, and the first connection sleeve 231 is connected with the second connection sleeve 232 in a sealing manner, further ensuring the sealing performance at the connection position between the first pipe body 210 and the second pipe body 220, and avoiding the leakage at the connection position of the pipeline connection structure 200.

Further, as shown in Fig. 16, Fig. 18 and Fig. 20, a first end of the second connection sleeve 232 abuts against an end portion of the receiving end 211. Specifically, during the connection of the first pipe body 210 with the second pipe body 220, the insertion end 221 of the second pipe body 220 with the second connection sleeve 232 is inserted into the receiving end 211 of the first pipe body 210 with the first connection sleeve 231; at least a part of the body of the second connection sleeve 232 is inserted into the first connection sleeve 231 and abuts against the end portion of the receiving end 211; and the first connection sleeve 231 and the second connection sleeve 232 are fixedly connected. Since the second connection sleeve 232 abuts against the end portion of the receiving end 211, it is possible to avoid any weak part at the connection position of the first pipe body 210 and the second pipe body 220 (if the second connection sleeve 232 is spaced from the receiving end 211, a part of the first connection sleeve 231 corresponding to the space is a weak part with only the first connection sleeve 231), further improve the strength at the connection position between the first pipe body 210 and the second pipe body 220, and prevent the breakage and leakage from occurring at the connection position of the pipeline connection structure 200.

Further, as shown in Fig. 16, Fig. 18 and Fig. 20, a second end of the second connection sleeve 232 protrudes from the first connection sleeve 231. Specifically, when the first pipe body 210 is connected with the second pipe body 220, the first connection sleeve 231, the second connection sleeve 232, and the second pipe body 220 are sequentially fitted over and fixedly connected to one another. Since the second end of the second connection sleeve 232 (the end of the second connection sleeve 232 away from the receiving end 211) protrudes from the first connection sleeve 231, the first connection sleeve 231, the second connection sleeve 232, and the second pipe body 220 form a stepped structure with a gradually reduced diameter, which can avoid stress concentration at the connection position of the first pipe body 210 and the second pipe body 220, and improve the stability at the connection position of the first pipe body 210 and the second pipe body 220.

In addition, when the first connection sleeve 231 and the second connection sleeve 232 are connected and fixed, it is convenient to observe the connection and fixation, facilitating the assembly and improving the assembly quality and efficiency.

Further, a protruding length of the second end of the second connection sleeve 232 from the first connection sleeve 231 is greater than or equal to 5 mm. Specifically, when the first pipe body 210 and the second pipe body 220 are connected, the second end of the second connection sleeve 232 protrudes from the first connection sleeve 231. By setting the protruding length of the second end of the second connection sleeve 232 from the first connection sleeve 231 to be greater than or equal to 5 mm, the stability at the connection position of the first pipe body 210 and the second pipe body 220 is improved, and the breakage and leakage at the connection position is effectively avoided.

In the present disclosure, the protruding length of the second end of the second connection sleeve 232 from the first connection sleeve 231 may be set as 5 mm, 10 mm or 15 mm and so on.

Further, as shown in Figs. 16-21, a protruding length of an end of the first connection sleeve 231 from the end portion of the receiving end 211 is larger than or equal to 10 mm. Specifically, when the first copper sleeve 213 is fitted over and connected with the receiving end 211, the end of the first connection sleeve 231 (facing an end face of the second pipe body 220) protrudes from the end face of the receiving end 211 (facing the end face of the second pipe body 220). Since the protruding length of the end of the first connection sleeve 231 from the end portion of the receiving end 211 is set to be larger than or equal to 10 mm, an overlapping length of the first connection sleeve 231 and the second connection sleeve 232 is ensured, further enhancing the stability at the connection position of the first pipe body 210 and the second pipe body 220, and avoiding the breakage and leakage at the connection position.

In the present disclosure, the protruding length of the end of the first connection sleeve 231 from the end portion of the receiving end 211 may be set as 10 mm, 15 mm or 20 mm and so on.

Further, as shown in Figs. 16-21, a protruding length of an end portion of the insertion end 221 from the second connection sleeve 232 is larger than or equal to 10 mm. During the connection of the first pipe body 210 with the second pipe body 220, the insertion end 221 of the second pipe body 220 with the second connection sleeve 232 is inserted into the receiving end 211 of the first pipe body 210 with the first connection sleeve 231; at least a part of the body of the second connection sleeve 232 is inserted into the first connection sleeve 231 and abuts against the end portion of the receiving end 211; and the first connection sleeve 231 and the second connection sleeve 232 are fixedly connected. By setting the protruding length of the end portion of the insertion end 221 from the second connection sleeve 232 to be larger than or equal to 10 mm, an overlapping length of the insertion end 221 and the receiving end 211 is ensured, further enhancing the stability at the connection position of the first pipe body 210 and the second pipe body 220, and avoiding the breakage and leakage at the connection position.

In the present disclosure, the protruding length of the end portion of the insertion end 221 from the second connection sleeve 232 may be set as 10 mm, 15 mm or 20 mm and so on.

Further, materials of the first pipe body 210 and the first connection sleeve 231 are different. Specifically, the first pipe body 210 has greater material hardness than the first connection sleeve 231. Since the first pipe body 210 adopts a material with high hardness, the overall strength of the pipeline connection structure 200 is improved, the impact resistance of the pipeline connection structure 200 is enhanced, and the pipeline breakage and leakage is avoided. In addition, since the first connection sleeve 231 adopts a material with low hardness, adverse effects on a first pipeline 10 during the connection and fixation of the first connection sleeve 231 and the first pipeline 10 can be avoided.

It should be noted that materials of the first pipe body 210 and the first connection sleeve 231 are known in the related art, and two different materials are selected in the present disclosure, which does not mean an improvement on the materials of the two components.

Specifically, materials of the second pipe body 220 and the second connection sleeve 232 are different. The second pipe body 220 has greater material hardness than the second connection sleeve 232. Since the second pipe body 220 adopts a material with high hardness, the overall strength of the pipeline connection structure 200 is improved, the impact resistance of the pipeline connection structure 200 is enhanced, and the pipeline breakage and leakage is avoided. In addition, since the second connection sleeve 232 adopts a material with low hardness, adverse effects on a second pipeline 20 during the connection and fixation of the second connection sleeve 232 and the second pipeline 20 can be avoided.

It should be noted that materials of the second pipe body 220 and the second connection sleeve 232 are known in the related art, and two different materials are selected in the present disclosure, which does not mean an improvement on the materials of the two components.

Further, the first pipe body 210 and the second pipe body 220 are stainless steel pipes. Specifically, the first pipe body 210 is a first stainless steel pipe, and the second pipe body 220 is a second stainless steel pipe. Since the first pipe body 210 is the first stainless steel pipe and the second pipe body 220 is the second stainless steel pipe, compared with the related art where the first pipe body 210 and the second pipe body 220 are both copper pipes, under the same specification, the first stainless steel pipe and the second stainless steel pipe have greater strength, further improving the overall strength and stability of the pipeline connection structure 200. In addition, compared with the copper pipes, the cost of the first stainless steel pipe and the second stainless steel pipe is lower, which can effectively reduce the manufacturing cost of the pipeline connection structure 200. Moreover, the first stainless steel pipe and the second stainless steel pipe have strong corrosion resistance and aging resistance, which can effectively prolong the service life of the pipeline connection structure 200.

In some embodiments, the first pipe body 210 and the second pipe body 220 are iron-containing pipes such as carbon steel, further reducing the manufacturing cost of the pipeline connection structure 200.

In some embodiments, the first pipe body 210 and the second pipe body 220 are pipes made of other materials, such as aluminum alloy, which will not be elaborated in the present disclosure.

Further, the first connection sleeve 10 and the second connection sleeve 20 are made of copper or copper alloy. In the present disclosure, the first pipe body 210 is a first stainless steel pipe, the second pipe body 220 is a second stainless steel pipe, the first connection sleeve 231 is a first copper sleeve, and the second connection sleeve 232 is a second copper sleeve. The first copper sleeve is fixedly connected to a receiving end 211 of the first stainless steel pipe by welding; the second copper sleeve is fixedly connected to the second stainless steel pipe by welding; and the first copper sleeve is fixedly connected to the second copper sleeve by welding. The first copper sleeve and the second copper sleeve have the same material, and the first stainless steel pipe and the second stainless steel pipe have the same material. Since the hardness of the copper sleeves is lower than that of the stainless steel pipes, when the first copper sleeve and the first stainless steel pipe are welded, the second copper sleeve and the second stainless steel pipe are welded, and the first copper sleeve and the second copper sleeve are welded, adverse influence of welding temperature on the first stainless steel pipe and the second stainless steel pipe can be effectively avoided, and the strength and stability of the pipeline connection structure 200 after connection can be ensured.

In other embodiments, the first connection sleeve 231 and the second connection sleeve 232 may be made of other materials, such as aluminum alloy, etc., which will not be elaborated in the present disclosure.

Moreover, in the present disclosure, the first pipe body 210 is a first stainless pipe, the second pipe body 220 is a second stainless steel pipe, the first connection sleeve 231 is a first copper sleeve, and the second connection sleeve 232 is a second copper sleeve. The first connection sleeve 231 is fixed to a receiving end 211 of the first stainless steel pipe by furnace welding, and the second connection sleeve 232 is fixed to the second stainless steel pipe by furnace welding. Since the first connection sleeve 231 and the receiving end 211 are welded in advance by furnace welding, and the second connection sleeve 232 and the second pipe body 220 are also welded in advance by furnace welding, the first connection sleeve 231 and the second connection sleeve 232 are welded to the first pipe body 210 and the second pipe body 220 respectively when processing the first pipe body 210 and the second pipe body 220, to reduce the workload during on-site assembly and improve the assembly efficiency.

In addition, the first connection sleeve 231 is fixed to the second connection sleeve 232 by flame welding, and the connection between the first pipe body 210 and the second pipe body 220 is achieved by on-site welding. Since the first connection sleeve 231 and the second connection sleeve 232 are fixedly connected by flame welding, the operation is convenient, and the connection efficiency of the pipeline connection structure 200 is improved.

Moreover, the low temperature of the flame welding does not tend to adversely affect the first tube body 210 as the first steel pipe and the second tube body 220 as the second steel pipe.

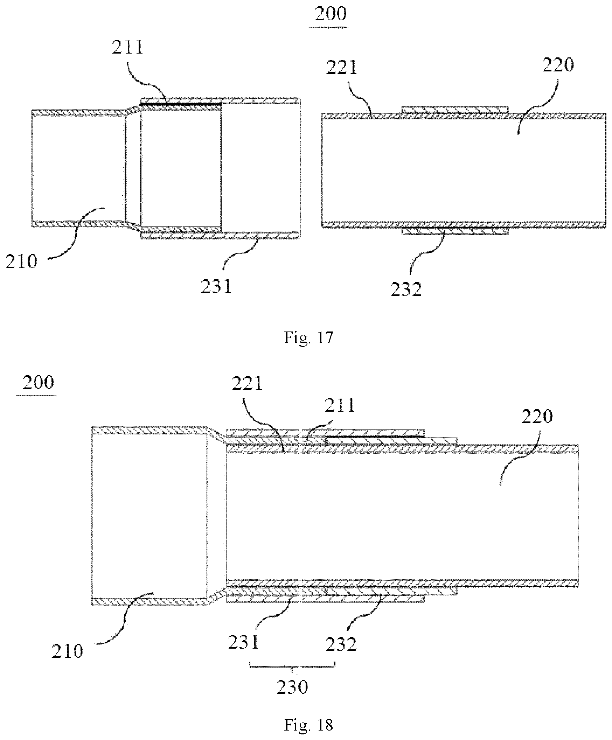

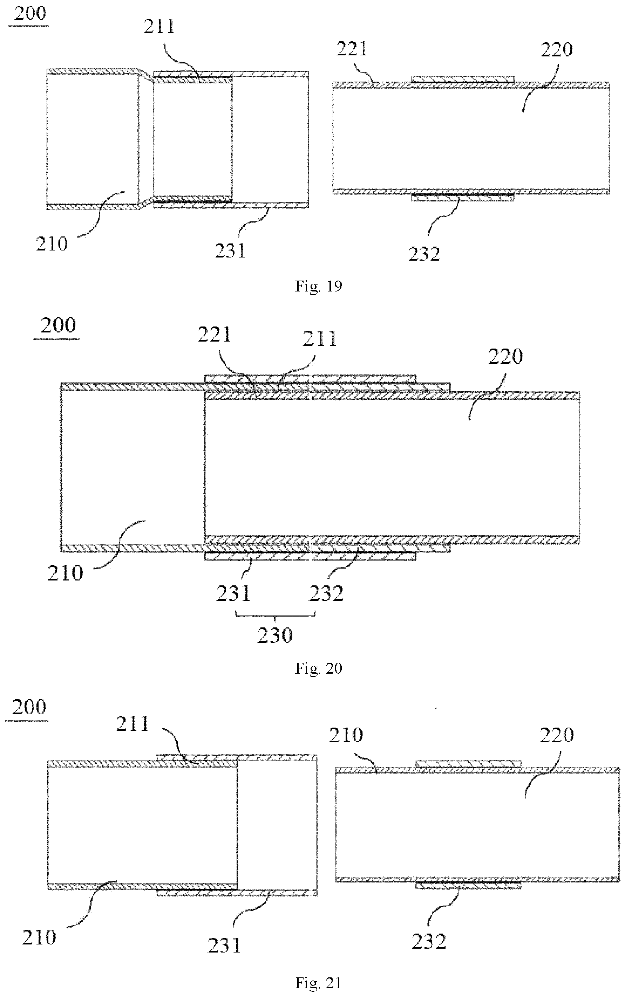

Further, the receiving end 211 is any one of a flared structure (as shown in Figs. 16-17), a necked structure (as shown in Figs. 18-19) and a straight pipe structure (as shown in Figs. 20-21). The receiving end 211 may be configured in various structures, meeting connection requirements of different pipes, ensuring the effective production and improving the production efficiency.

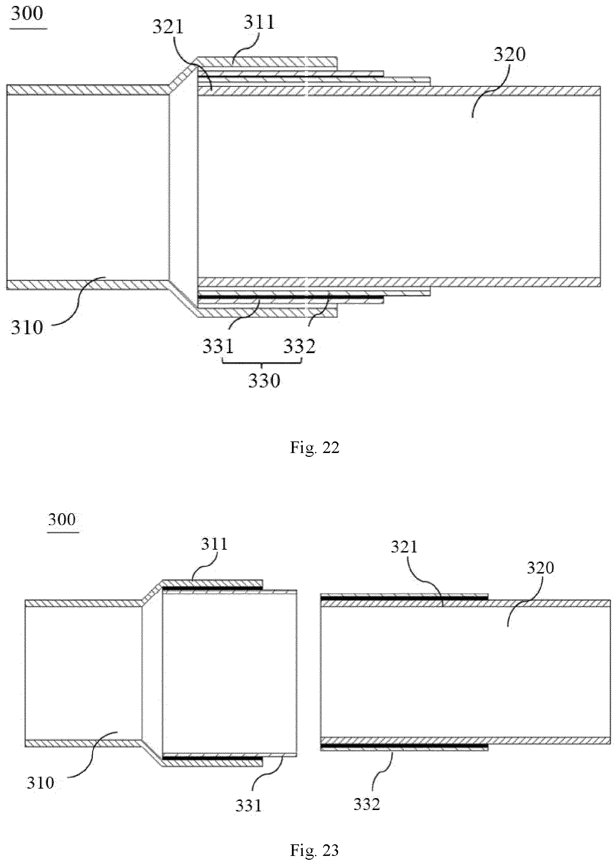

A pipeline connection structure 300 according to embodiments of a fourth aspect of the present disclosure will be described below with reference to Figs. 22-27.

As shown in Figs. 22-27, embodiments of the present disclosure provide a pipeline connection structure 300. The pipeline connection structure 300 includes a first pipe body 310, a second pipe body 320, and a connection sleeve assembly 330. The first pipe body 310 has a receiving end 311. The second pipe body 320 has an insertion end 321, and the insertion end 321 is inserted into the receiving end 311. The connection sleeve assembly 330 includes a first connection sleeve 331 and a second connection sleeve 332. The second connection sleeve 332 is fitted over and fixedly connected to the insertion end 321. The first connection sleeve 331 is inserted into and fixedly connected to the receiving end 311. The first connection sleeve 331 is fitted over and fixedly connected to the second connection sleeve 332.

Specifically, during connection of the pipeline connection structure 300, the first connection sleeve 331 is inserted into and fixed to the receiving end 311; the second connection sleeve 332 is fitted over and fixed to the receiving end 321; the insertion end 321 with the second connection sleeve 332 is inserted into the first connection sleeve 331; and the first connection sleeve 331 is fixed to the second connection sleeve 332. Since the insertion end 321 of the second pipeline connection structure 300 is inserted into the receiving end 311 of the first pipeline connection structure 300, the first pipeline connection structure 300 and the second pipeline connection structure 300 have an overlapping section at a connection position and are fixedly connected by the connection sleeve assembly 330, improving the connection strength of the pipeline connection structure 300 and avoiding breakage and leakage at the connection position of the pipeline connection structure 300.

It should be understood that the first pipe body 310 and the second pipe body 320 are both circular pipes, the first connection sleeve 331 and the second connection sleeve 332 are both circular sleeves, and an inner diameter of the receiving end 311 is slightly larger than an outer diameter of the first connection sleeve 331. When the first connection sleeve 331 is inserted into the receiving end 311, an inner wall of the receiving end 311 abuts against an outer surface of the first connection sleeve 331, such that a gap between them is reduced, and a problem of shaking caused by a large gap between them is avoided. In addition, an inner diameter of the second connection sleeve 332 is slightly larger than an outer diameter of the second pipe body 320. When the second connection sleeve 332 is fitted over the second pipe body 320, an inner wall of the second connection sleeve 332 abuts against an outer surface of the second pipe body 320, such that a gap between them is reduced, and a problem of shaking caused by a large gap between them is also avoided. Moreover, an outer diameter of the second connection sleeve 332 is slightly smaller than an inner diameter of the first connection sleeve 331, such that a gap between the first connection sleeve 331 and the second connection sleeve 332 is reduced, avoiding shaking caused by a large gap at a connection position between the first connection sleeve 331 and the second connection sleeve 332, and improving the strength at the connection position of the pipeline connection structure 300.

It should be noted that the receiving end 311 is connected with the first connection sleeve 331 in a sealing manner, the second connection sleeve 332 is connected with the second pipe body 320 in a sealing manner, and the first connection sleeve 331 is connected with the second connection sleeve 332 in a sealing manner, further ensuring the sealing performance at the connection position between the first pipe body 310 and the second pipe body 320, and avoiding the leakage at the connection position of the pipeline connection structure 300.

When the pipeline connection structure 300 according to the present disclosure is applied to an air conditioner, the pipeline connection structure 300 may include more than one first pipe body 310 and more than one second pipe body 320, that is, may be formed by a plurality of the first pipe bodies 310 and a plurality of the second pipe bodies 320. The first pipe body 310 is on one side of the connection position, the second pipe body 320 is located on the other side of the connection position, and the two are connected and fixed by the connection sleeve assembly 330.

Additionally, in some embodiments, the receiving end 311 is arranged on the second pipe body 320, and the insertion end 321 is arranged on the first pipe body 310. The connection structure of this embodiment is arranged in a mirroring manner with other embodiments of the present disclosure, which can refer to the embodiments in the present disclosure for detail.

It is further understood that, as shown in Figs. 22-27, the first connection sleeve 331 protrudes from an end portion of the receiving end 311. Specifically, the first connection sleeve is inserted into and fixedly connected to the receiving end 311, and the second connection sleeve 332 is fitted over and fixedly connected to the second pipe body 320. During connection of the first pipe body 310 with the second pipe body 320, the insertion end 321 is inserted into the first connection sleeve 331, and the first connection sleeve 331 is fixedly connected to the second connection sleeve 332. In such a way, the connection between the first pipe body 310 and the second pipe body 320 can be realized. Since the first connection sleeve 331 protrudes from the end portion of the receiving end 311, an overlapping length of the first connection sleeve 331 and the second connection sleeve 332 is increased, the connecting strength at the connection position of the pipeline connection structure 300 is further improved, and the breakage or leakage at the connection position of the pipeline connection structure 300 is effectively avoided.

Further, as shown in Figs. 22-27, the second connection sleeve 332 is at least partially inserted into the first connection sleeve 331. Specifically, during the connection of the first pipe body 310 with the second pipe body 320, the insertion end 321 of the second pipe body 320 with the second connection sleeve 332 is inserted into the first connection sleeve 331 of the first pipe body 310 with the first connection sleeve 331, at least a part of a body of the second connection sleeve 332 is inserted into the first connection sleeve 331, and the first connection sleeve 331 and the second connection sleeve 332 are fixedly connected. The arrangement between the second connection sleeve 332 and the first connection sleeve 331 further improves the strength of connection between the first connection sleeve 331 and the second connection sleeve 332, to avoid refrigerant leakage caused by the breakage at the connection position. In addition, an end portion of the insertion end 321 is flush with a first end of the second connection sleeve 332, to avoid a weak part at the connection position between the first pipe body 310 and the second pipe body 320, the strength at the connection position between the first pipe body 310 and the second pipe body 320 is further improved, and the breakage and leakage at the connection position of the pipeline connection structure 300 is prevented.

Further, as shown in Fig. 22, Fig. 24 and Fig. 26, the second connection sleeve 332 protrudes to the outside of the first connection sleeve 331. Specifically, when the firs pipe body 310 and the second pipe body 320 are connected, the receiving end 311 of the first pipe body 310, the first connection sleeve 331, the second connection sleeve 332, and the second pipe body 320 are sequentially fitted over and fixedly connected to each other. The first end of the second connection sleeve 31 is inserted into the first connection sleeve 331, and a second end of the second connection sleeve 332 (an end of the second connection sleeve 332 away from the receiving end 311) protrudes from the first connection sleeve 331, so that the receiving end 311 of the first pipe body 310, the first connection sleeve 331, the second connection sleeve 332, and the second pipe body 320 form a stepped structure with a gradually reduced diameter, which can avoid stress concentration at the connection position of the first pipe body 310 and the second pipe body 320, and improve the stability at the connection position of the first pipe body 310 and the second pipe body 320.

Further, a protruding length of the second connection sleeve 332 from the first connection sleeve 331 is greater than or equal to 10 mm. Specifically, when the first pipe body 310 and the second pipe body 320 are connected, the second end of the second connection sleeve 332 protrudes from the first connection sleeve 331. Since the protruding length of the second end of the second connection sleeve 332 from the first connection sleeve 331 is greater than or equal to 10 mm, the stability at the connection position between the first pipe body 310 and the second pipe body 320 is further improved, and the breakage and leakage at the connection position is effectively avoided.

In addition, when the first connection sleeve 331 and the second connection sleeve 332 are connected and fixed, it is convenient to observe the connection and fixation, facilitating the assembly and improving the assembly quality and efficiency.

In the present disclosure, the protruding length of the second connection sleeve 332 from the first connection sleeve 331 can be set as 10 mm, 12 mm, 15 mm and so on.

Further, as shown in Figs. 22-27, a protruding length of an end of the first connection sleeve 331 from the receiving end 311 is greater than or equal to 5 mm. Specifically, when the first connection sleeve 331 is inserted into and fixedly connected with the receiving end 311, the end of the first connection sleeve 331 (facing an end face of the second pipe body 320) protrudes from an end face of the receiving end 311 (facing the end face of the second pipe body 320). Since the protruding length of the end of the first connection sleeve 331 from the receiving end 311 is greater than or equal to 5 mm, an overlapping length of the first connection sleeve 331 and the second connection sleeve 332 is ensured, further enhancing the stability at the connection position of the first pipe body 310 and the second pipe body 320, and avoiding the breakage and leakage at the connection position.

In the present disclosure, the protruding length of the end of the first connection sleeve 331 from the receiving end 311 can be set as 5 mm, 7 mm, 9 mm and so on.

Further, materials of the first pipe body 310 and the first connection sleeve 331 are different. Specifically, the first pipe body 310 has greater material hardness than the first connection sleeve 331. Since the first pipe body 310 adopts a material with high hardness, the overall strength of the pipeline connection structure 300 is improved, the impact resistance of the pipeline connection structure 300 is enhanced, and the pipeline breakage and leakage is avoided. In addition, since the first connection sleeve 331 adopts a material with low hardness, adverse effects on the first pipeline 10 during the connection and fixation of the first connection sleeve 331 and the first pipeline 10 can be avoided.

It should be noted that materials of the first pipe body 310 and the first connection sleeve 331 are known in the related art, and two different materials are selected in the present disclosure, which does not mean an improvement on the materials of the two components.

Specifically, materials of the second pipe body 320 and the second connection sleeve 332 are different. The second pipe body 320 has greater material hardness than the second connection sleeve 332. Since the second pipe body 320 adopts a material with high hardness, the overall strength of the pipeline connection structure 300 is improved, the impact resistance of the pipeline connection structure 300 is enhanced, and the pipeline breakage and leakage is avoided. In addition, since the second connection sleeve 332 adopts a material with low hardness, adverse effects on the second pipeline 20 during the connection and fixation of the second connection sleeve 332 and the second pipeline 20 can be avoided.

It should be noted that materials of the second pipe body 320 and the second connection sleeve 332 are known in the related art, and two different materials are selected in the present disclosure, which does not mean an improvement on the materials of the two components.

Further, the first pipe body 310 and the second pipe body 320 are stainless steel pipes. Specifically, the first pipe body 310 is a first stainless steel pipe, and the second pipe body 320 is a second stainless steel pipe. Since the first pipe body 310 is the first stainless steel pipe and the second pipe body 320 is the second stainless steel pipe, compared with the related art where the first pipe body 310 and the second pipe body 320 are both copper pipes, under the same specification, the first stainless steel pipe and the second stainless steel pipe have greater strength, further improving the overall strength and stability of the pipeline connection structure 300. In addition, compared with the copper pipes, the cost of the first stainless steel pipe and the second stainless steel pipe is lower, which can effectively reduce the manufacturing cost of the pipeline connection structure 300. Moreover, the first stainless steel pipe and the second stainless steel pipe have strong corrosion resistance and aging resistance, which can effectively prolong the service life of the pipeline connection structure 300.

In some embodiments, the first pipe body 310 and the second pipe body 320 are iron-containing pipes such as carbon steel, further reducing the manufacturing cost of the pipeline connection structure 300.

In some embodiments, the first pipe body 310 and the second pipe body 320 are pipes made of other materials, such as aluminum alloy, which will not be elaborated in the present disclosure.

Further, the first connection sleeve 10 and the second connection sleeve 20 are made of copper or copper alloy. In the present disclosure, the first pipe body 310 is a first stainless steel pipe, the second pipe body 320 is a second stainless steel pipe, the first connection sleeve 331 is a first copper sleeve, and the second connection sleeve 332 is a second copper sleeve. The first copper sleeve is fixedly connected to a receiving end 311 of the first stainless steel pipe by welding; the second copper sleeve is fixedly connected to the second stainless steel pipe by welding; and the first copper sleeve is fixedly connected to the second copper sleeve by welding. The first copper sleeve and the second copper sleeve have the same material, and the first stainless steel pipe and the second stainless steel pipe have the same material. Since the hardness of the copper sleeves is lower than of the stainless steel pipes, when the first copper sleeve and the first stainless steel pipe are welded, the second copper sleeve and the second stainless steel pipe are welded, and the first copper sleeve and the second copper sleeve are welded, adverse influence of welding temperature on the first stainless steel pipe and the second stainless steel pipe can be effectively avoided, and the strength and stability of the pipeline connection structure 300 after connection can be ensured.

In other embodiments, the first connection sleeve 331 and the second connection sleeve 332 may be made of other materials, such as aluminum alloy, etc., which will not be elaborated in the present disclosure.

Moreover, in the present disclosure, the first pipe body 310 is a first stainless pipe, the second pipe body 320 is a second stainless steel pipe, the first connection sleeve 331 is a first copper sleeve, and the second connection sleeve 332 is a second copper sleeve. The first connection sleeve 331 is fixed to a receiving end 311 of the first stainless steel pipe by furnace welding, and the second connection sleeve 332 is fixed to the second stainless steel pipe by furnace welding. Since the first connection sleeve 331 and the receiving end 311 are welded in advance by furnace welding, and the second connection sleeve 332 and the second pipe body 320 are also welded in advance by furnace welding, the first connection sleeve 331 and the second connection sleeve 332 are welded to the first pipe body 310 and the second pipe body 320 respectively when processing the first pipe body 310 and the second pipe body 320, to reduce the workload during on-site assembly and improve the assembly efficiency.

In addition, the first connection sleeve 331 is fixed to the second connection sleeve 332 by flame welding, and the connection between the first pipe body 310 and the second pipe body 320 is achieved by on-site welding. Since the first connection sleeve 331 and the second connection sleeve 332 are fixedly connected by flame welding, the operation is convenient, and the connection efficiency of the pipeline connection structure 200 is improved.

Moreover, the low temperature of the flame welding does not tend to adversely affect the first tube body 310 as the first steel pipe and the second tube body 320 as the second steel pipe.

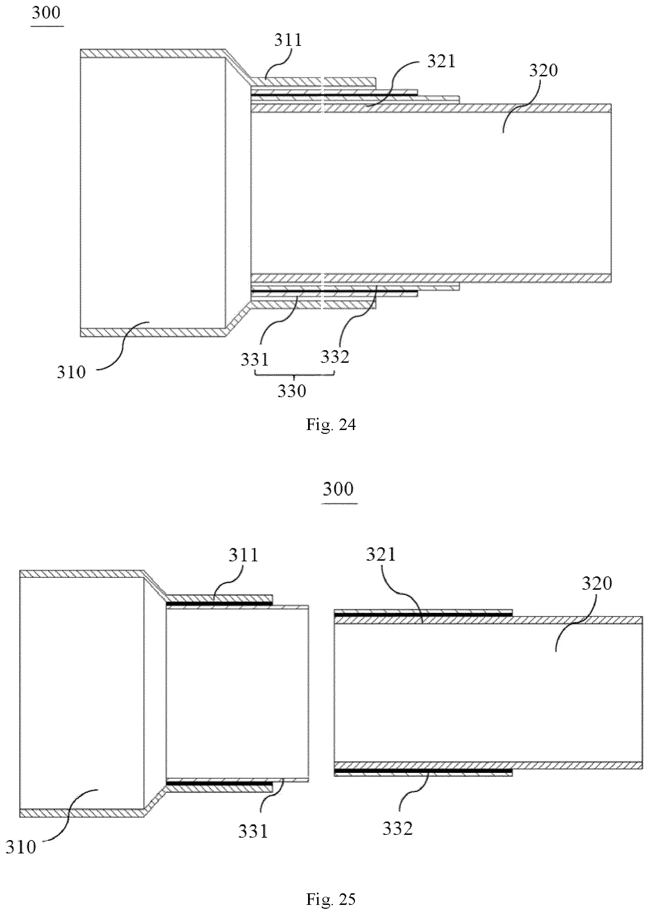

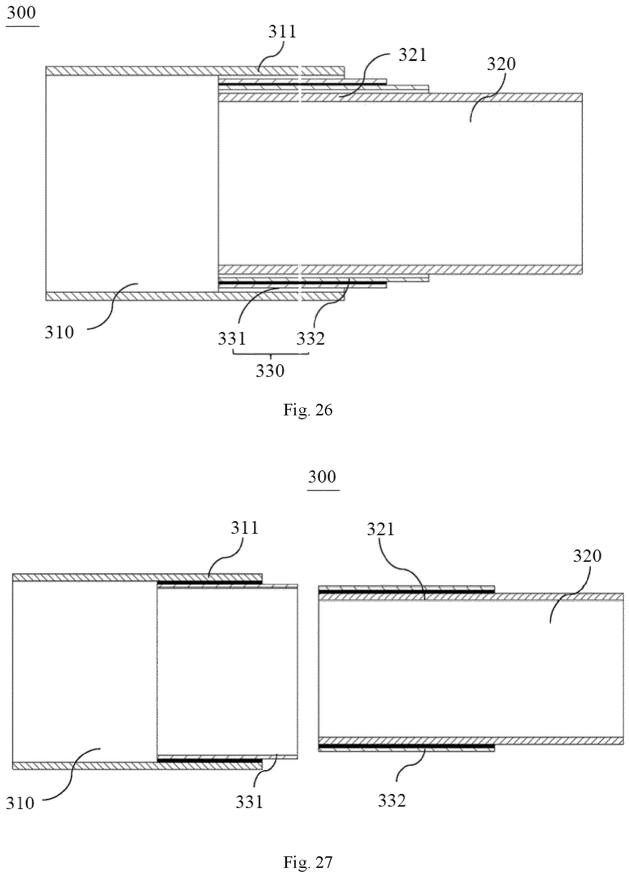

Further, the receiving end 311 is any one of a flared structure (as shown in Figs. 22-23), a necked structure (as shown in Figs. 24-25) and a straight pipe structure (as shown in Figs. 26-27). The receiving end 311 may be configured in various structures, meeting connection requirements of different pipes, ensuring the effective production and improving the production efficiency.

A compressor assembly according to embodiments of the present disclosure will be described below.

The compressor assembly according to embodiments of the present disclosure includes a compressor and the pipeline connection structure 100 (or the pipeline connection structure 200 or the pipeline connection structure 300). The pipeline connection structure is the pipeline connection structure 100, the pipeline connection structure 200 or the pipeline connection structure 300 described in any of the above embodiments. The compressor assembly according to embodiments of the present disclosure has the advantage of high connection strength.

An air conditioner according to embodiments of the present disclosure will be described below.

The air conditioner according to embodiments of the present disclosure includes a compressor that is the compressor described in the above embodiments. The air conditioner according to embodiments of the present disclosure has the advantage of high structural strength.

The present disclosure also provides an air conditioner including the above-mentioned pipeline connection structure 200 (as shown in Figs. 16-21). Specifically, during connection of the pipeline connection structure 200 of the air conditioner, the insertion end 221 of the second pipe body 220 is inserted into the receiving end 211 of the first pipe body 210, and the connection sleeve assembly 230 is arranged outside the connection position between the first pipe body 210 and the second pipe body 220. Since the connection sleeve assembly 230 is fitted with the first pipe body 210 and the second pipe body 220, the connection and fixation between the first pipe body 210 and the second pipe body 220 can be realized. Since the insertion end 221 of the second pipe body 220 is inserted into the receiving end 211 of the first pipe body 210, the first pipe body 210 and the second pipe body 220 overlap at the connection position and are fixedly connected through the connection sleeve assembly 230. Thus, the connection strength of the pipeline connection structure 200 is improved, and the situation that the breakage and leakage occurs at the connection position of the pipeline connection structure 200 is avoided.

The present disclosure proposes an air conditioner including the above-mentioned pipeline connection structure 300 (as shown in Figs. 22-27). Specifically, during connection of the pipeline connection structure 300 of the air conditioner, the first connection sleeve 331 is inserted into and fixed to the receiving end 311; the second connection sleeve 332 is fitted over and fixed to the receiving end 321; the insertion end 321 with the second connection sleeve 332 is inserted into the first connection sleeve 331; and the first connection sleeve 331 is fixed to the second connection sleeve 332. Since the insertion end 321 of the second pipeline connection structure 300 is inserted into the receiving end 311 of the first pipeline connection structure 300, the first pipeline connection structure 300 and the second pipeline connection structure 300 have the overlapping section at the connection position and are fixedly connected by the connection sleeve assembly 330, improving the connection strength of the pipeline connection structure 300 and avoiding breakage and leakage at the connection position of the pipeline connection structure 300.

## Claims

1. A pipeline connection structure (100, 200, 300, 400), comprising: a first pipe body (210, 310, 41) and a second pipe body (220, 320, 42), wherein: the first pipe body (210, 310, 41) is a first steel pipe (11), and the second pipe body (220, 320, 42) is a second steel pipe, the first steel pipe (11) comprises an upper section (11A) of the first steel pipe (11) and a lower section (11B) of the first steel pipe (11), and the second steel pipe (21) comprises an upper section (21A) of the second steel pipe (21) and a lower section (21B) of the second steel pipe (21); and
a connection sleeve assembly (230, 330) fitted inside or outside the first pipe body (210, 310, 41), and fitted outside the second pipe body (220, 320, 42), wherein the connection sleeve assembly (230, 330) is fixedly connected to the first pipe body (210, 310, 41) and the second pipe body (220, 320, 42) to make the first pipe body (210, 310, 41) be in communication with the second pipe body (220, 320, 42);
wherein the connection sleeve assembly (230, 330) comprises a first copper sleeve (12) and a second copper sleeve (22), the first copper sleeve (12) comprises an upper section (12A) of the first copper sleeve (12) and a lower section (12B) of the first copper sleeve (12), and the second copper sleeve (22) comprises an upper section (22A) of the second copper sleeve (22) and a lower section (22B) of the second copper sleeve (22); the first copper sleeve (12) is fitted over the upper section (11A) of the first steel pipe (11), and the upper section (12A) of the first copper sleeve (12) extends beyond the upper section (11A) of the first steel pipe (11) to form a first extension section; the second copper sleeve (22) is fitted over the lower section of the second steel pipe (21); the first steel pipe (11) is welded with the first copper sleeve (12), and the second steel pipe (21) is welded with the second copper sleeve (22); and the first extension section of the first copper sleeve (12) is fitted over the second copper sleeve (22) and is welded with the second copper sleeve (22);
wherein the lower section (22B) of the second copper sleeve (22) extends beyond the lower section (21B) of the second steel pipe (21) to form a second extension section; and
wherein an end face of the lower section (21B) of the second steel pipe (21) and the end face of the upper section (11A) of the first steel pipe (11) are spaced along an axial direction, the first extension section and the second extension section are welded to form a welding overlap area along a radial direction, and the welding overlap area is located between the end face of the lower section (21B) of the second steel pipe (21) and the end face of the upper section (11A) of the first steel pipe (11).

2. The pipeline connection structure (100, 200, 300, 400) according to claim 1, wherein the upper section (22A) of the second copper sleeve (22) extends from the upper section (12A) of the first copper sleeve (12) by a predetermined length, or, wherein the first steel pipe (11) or the first copper sleeve (12) is a pipe with a constant diameter or a pipe with a variable diameter.

3. The pipeline connection structure (100, 200, 300, 400) according to claim 1, wherein an end face of the lower section (22B) of the second copper sleeve (22) abuts against or is spaced from an end face of the upper section (11A) of the first steel pipe (11), or, wherein the lower section (22B) of the second copper sleeve (22) extends into the first steel pipe (11).

4. The pipeline connection structure (100, 200, 300, 400) according to any one of claims 1 to 3, wherein an inner wall of the first steel pipe (11) comprises a positioning protrusion (111) for stopping the lower section (22B) of the second copper sleeve (22) and/or, wherein the upper section (11A) of the first steel pipe (11) is flared or necked.

5. The pipeline connection structure (100, 200, 300, 400) according to claim 1, wherein the first pipe body (210, 310, 41) has a receiving end (211, 311), the second pipe body (220, 320, 42) has an insertion end (221, 321), and the insertion end (221, 321) is inserted into the receiving end (211, 311); and the connection sleeve assembly (230, 330) is fitted over a connection position between the first pipe body (210, 310, 41) and the second pipe body (220, 320, 42), and is fixedly connected to an outer surface of the receiving end (211, 311) and an outer surface of the second pipe body (220, 320, 42).

6. The pipeline connection structure (100, 200, 300, 400) according to claim 1, wherein the connection sleeve assembly (230, 330) comprises: a first connection sleeve (231, 331) fitted over the receiving end (211, 311) and protruding from an end portion of the receiving end (211, 311); and a second connection sleeve (232, 332) fitted over the second pipe body (220, 320, 42), wherein an end portion of the insertion end (221, 321) protrudes from a first end of the second connection sleeve (232, 332), the second connection sleeve (232, 332) is at least partially inserted in the first connection sleeve (231, 331), and the first connection sleeve (231, 331) is fixedly connected with the second connection sleeve (232, 332).

7. The pipeline connection structure (100, 200, 300, 400) according to claim 6, wherein the first end of the second connection sleeve (232, 332) abuts against the end portion of the receiving end (211, 311) and/or, wherein a protruding length of the end portion of the insertion end (221, 321) from the second connection sleeve (232, 332) is greater than or equal to 10 mm.

8. The pipeline connection structure (100, 200, 300, 400) according to claim 1, wherein: the first pipe body (210, 310, 41) has a receiving end (211, 311), the second pipe body (220, 320, 42) has an insertion end (221, 321), and the insertion end (221, 321) is inserted into the receiving end (211, 311); and the connection sleeve assembly (230, 330) comprises: a first connection sleeve (231, 331) inserted in and fixedly connected to the receiving end (211, 311); and a second connection sleeve fitted over and fixedly connected to the insertion end (221, 321), wherein the first connection sleeve (231, 331) is fitted over and fixedly connected to the second connection sleeve (232, 332), optionally, wherein the first connection sleeve (231, 331) protrudes from an end portion of the receiving end (211, 311).

9. The pipeline connection structure (100, 200, 300, 400) according to claim 8, wherein the second connection sleeve (232, 332) is at least partially inserted in the first connection sleeve (231, 331).

10. The pipeline connection structure (100, 200, 300, 400) according to any one of claims 6 to 9, wherein a second end of the second connection sleeve (232, 332) protrudes from the first connection sleeve (231, 331).

11. The pipeline connection structure (100, 200, 300, 400) according to any one of claims 6 to 10, wherein a protruding length of the second end of the second connection sleeve (232, 332) from the first connection sleeve (231, 331) is greater than or equal to 5 mm and/or, wherein a protruding length of an end of the first connection sleeve (231, 331) from the receiving end (211, 311) is greater than or equal to 5 mm.

12. The pipeline connection structure (100, 200, 300, 400) according to any one of claims 6 to 11, wherein a protruding length of the end portion of the insertion end (221, 321) from the second connection sleeve (232, 332) is greater than or equal to 10 mm and/or, wherein materials of the first pipe body (210, 310, 41) and the first connection sleeve (231, 331) are different, and/or materials of the second pipe body (220, 320, 42) and the second connection sleeve (232, 332) are different.

13. The pipeline connection structure (100, 200, 300, 400) according to claim 12, wherein the first connection sleeve (231, 331) and the second connection sleeve (232, 332) are made of copper or copper alloy, or, wherein the first pipe body (210, 310, 41) and the second pipe body (220, 320, 42) are stainless steel pipes.

14. A compressor assembly, comprising a compressor and the pipeline connection structure (100, 200, 300, 400) according to any one of claims 1 to 13, or an air conditioner, comprising a compressor assembly with a compressor and the pipeline structure according to any one of claims 1 to 13.

## Patentansprüche

1. Rohrleitungsverbindungsstruktur (100, 200, 300, 400), umfassend: einen ersten Rohrkörper (210, 310, 41) und einen zweiten Rohrkörper (220, 320, 42), wobei: der erste Rohrkörper (210, 310, 41) ein erstes Stahlrohr (11) ist und der zweite Rohrkörper (220, 320, 42) ein zweites Stahlrohr ist, das erste Stahlrohr (11) einen oberen Abschnitt (11A) des ersten Stahlrohrs (11) und einen unteren Abschnitt (11B) des ersten Stahlrohrs (11) umfasst und das zweite Stahlrohr (21) einen oberen Abschnitt (21A) des zweiten Stahlrohrs (21) und einen unteren Abschnitt (21B) des zweiten Stahlrohrs (21) umfasst; und
eine Verbindungshülsenanordnung (230, 330), die innerhalb oder außerhalb des ersten Rohrkörpers (210, 310, 41) montiert ist und außerhalb des zweiten Rohrkörpers (220, 320, 42) montiert ist, wobei die Verbindungshülsenanordnung (230, 330) mit dem ersten Rohrkörper (210, 310, 41) und dem zweiten Rohrkörper (220, 320, 42) feststehend verbunden ist, um zu bewirken, dass der erste Rohrkörper (210, 310, 41) mit dem zweiten Rohrkörper (220, 320, 42) in Verbindung steht;
wobei die Verbindungshülsenanordnung (230, 330) eine erste Kupferhülse (12) und eine zweite Kupferhülse (22) umfasst, die erste Kupferhülse (12) einen oberen Abschnitt (12A) der ersten Kupferhülse (12) und einen unteren Abschnitt (12B) der ersten Kupferhülse (12) umfasst und die zweite Kupferhülse (22) einen oberen Abschnitt (22A) der zweiten Kupferhülse (22) und einen unteren Abschnitt (22B) der zweiten Kupferhülse (22) umfasst; die erste Kupferhülse (12) über den oberen Abschnitt (11A) des ersten Stahlrohrs (11) montiert ist und sich der obere Abschnitt (12A) der ersten Kupferhülse (12) über den oberen Abschnitt (11A) des ersten Stahlrohrs (11) hinaus erstreckt, um einen ersten Verlängerungsabschnitt zu bilden; die zweite Kupferhülse (22) über den unteren Abschnitt des zweiten Stahlrohrs (21) montiert ist; das erste Stahlrohr (11) mit der ersten Kupferhülse (12) verschweißt ist und das zweite Stahlrohr (21) mit der zweiten Kupferhülse (22) verschweißt ist; und der erste Verlängerungsabschnitt der ersten Kupferhülse (12) über die zweite Kupferhülse (22) montiert ist und mit der zweiten Kupferhülse (22) verschweißt ist;
wobei sich der untere Abschnitt (22B) der zweiten Kupferhülse (22) über den unteren Abschnitt (21B) des zweiten Stahlrohrs (21) hinaus erstreckt, um einen zweiten Verlängerungsabschnitt zu bilden; und
wobei eine Endfläche des unteren Abschnitts (21B) des zweiten Stahlrohrs (21) und die Endfläche des oberen Abschnitts (11A) des ersten Stahlrohrs (11) entlang einer Axialrichtung beabstandet sind, der erste Verlängerungsabschnitt und der zweite Verlängerungsabschnitt verschweißt sind, um einen Schweißungs-Überlappungsbereich entlang einer Radialrichtung zu bilden, und sich der Schweißungs-Überlappungsbereich zwischen der Endfläche des unteren Abschnitts (21B) des zweiten Stahlrohrs (21) und der Endfläche des oberen Abschnitts (11A) des ersten Stahlrohrs (11) befindet.

2. Rohrleitungsverbindungsstruktur (100, 200, 300, 400) nach Anspruch 1, wobei sich der obere Abschnitt (22A) der zweiten Kupferhülse (22) um eine vorgegebene Länge von dem oberen Abschnitt (12A) der ersten Kupferhülse (12) erstreckt oder wobei das erste Stahlrohr (11) oder die erste Kupferhülse (12) ein Rohr mit einem konstanten Durchmesser oder ein Rohr mit einem veränderlichen Durchmesser ist.

3. Rohrleitungsverbindungsstruktur (100, 200, 300, 400) nach Anspruch 1, wobei eine Endfläche des unteren Abschnitts (22B) der zweiten Kupferhülse (22) an einer Endfläche des oberen Abschnitts (11A) des ersten Stahlrohrs (11) anliegt oder davon beabstandet ist oder wobei sich der untere Abschnitt (22B) der zweiten Kupferhülse (22) in das erste Stahlrohr (11) erstreckt.

4. Rohrleitungsverbindungsstruktur (100, 200, 300, 400) nach einem der Ansprüche 1 bis 3, wobei eine innere Wand des ersten Stahlrohrs (11) einen Positionierungsvorsprung (111) zum Anhalten des unteren Abschnitts (22B) der zweiten Kupferhülse (22) umfasst und/oder wobei der obere Abschnitt (11A) des ersten Stahlrohrs (11) aufgeweitet oder verengt ist.

5. Rohrleitungsverbindungsstruktur (100, 200, 300, 400) nach Anspruch 1, wobei der erste Rohrkörper (210, 310, 41) ein Aufnahmeende (211, 311) aufweist, der zweite Rohrkörper (220, 320, 42) ein Einsteckende (221, 321) aufweist und das Einsteckende (221, 321) in das Aufnahmeende (211, 311) eingesteckt ist; und die Verbindungshülsenanordnung (230, 330) über eine Verbindungsstelle zwischen dem ersten Rohrkörper (210, 310, 41) und dem zweiten Rohrkörper (220, 320, 42) montiert ist und mit einer Außenoberfläche des Aufnahmeendes (211, 311) und einer Außenoberfläche des zweiten Rohrkörpers (220, 320, 42) feststehend verbunden ist.

6. Rohrleitungsverbindungsstruktur (100, 200, 300, 400) nach Anspruch 1, wobei die Verbindungshülsenanordnung (230, 330) Folgendes umfasst: eine erste Verbindungshülse (231, 331), die über das Aufnahmeende (211, 311) montiert ist und von einem Endabschnitt des Aufnahmeendes (211, 311) vorsteht; und eine zweite Verbindungshülse (232, 332), die über den zweiten Rohrkörper (220, 320, 42) montiert ist, wobei ein Endabschnitt des Einsteckendes (221, 321) von einem ersten Ende der zweiten Verbindungshülse (232, 332) vorsteht, die zweite Verbindungshülse (232, 332) mindestens teilweise in die erste Verbindungshülse (231, 331) eingesteckt ist und die erste Verbindungshülse (231, 331) mit der zweiten Verbindungshülse (232, 332) feststehend verbunden ist.

7. Rohrleitungsverbindungsstruktur (100, 200, 300, 400) nach Anspruch 6, wobei das erste Ende der zweiten Verbindungshülse (232, 332) an dem Endabschnitt des Aufnahmeendes (211, 311) anliegt und/oder wobei eine vorstehende Länge des Endabschnitts des Einsteckendes (221, 321) von der zweiten Verbindungshülse (232, 332) größer als oder gleich 10 mm ist.

8. Rohrleitungsverbindungsstruktur (100, 200, 300, 400) nach Anspruch 1, wobei: der erste Rohrkörper (210, 310, 41) ein Aufnahmeende (211, 311) aufweist, der zweite Rohrkörper (220, 320, 42) ein Einsteckende (221, 321) aufweist und das Einsteckende (221, 321) in das Aufnahmeende (211, 311) eingesteckt ist; und die Verbindungshülsenanordnung (230, 330) Folgendes umfasst: eine erste Verbindungshülse (231, 331), die in das Aufnahmeende (211, 311) eingesteckt und damit feststehend verbunden ist; und eine zweite Verbindungshülse, die über das Einsteckende (221, 321) montiert und damit feststehend verbunden ist, wobei die erste Verbindungshülse (231, 331) über die zweite Verbindungshülse (232, 332) montiert und damit feststehend verbunden ist, wobei optional die erste Verbindungshülse (231, 331) von einem Endabschnitt des Aufnahmeendes (211, 311) vorsteht.

9. Rohrleitungsverbindungsstruktur (100, 200, 300, 400) nach Anspruch 8, wobei die zweite Verbindungshülse (232, 332) mindestens teilweise in die erste Verbindungshülse (231, 331) eingesteckt ist.

10. Rohrleitungsverbindungsstruktur (100, 200, 300, 400) nach einem der Ansprüche 6 bis 9, wobei ein zweites Ende der zweiten Verbindungshülse (232, 332) von der ersten Verbindungshülse (231, 331) vorsteht.

11. Rohrleitungsverbindungsstruktur (100, 200, 300, 400) nach einem der Ansprüche 6 bis 10, wobei eine vorstehende Länge des zweiten Endes der zweiten Verbindungshülse (232, 332) von der ersten Verbindungshülse (231, 331) größer als oder gleich 5 mm ist und/oder wobei eine vorstehende Länge eines Endes der ersten Verbindungshülse (231, 331) von dem Aufnahmeende (211, 311) größer als oder gleich 5 mm ist.

12. Rohrleitungsverbindungsstruktur (100, 200, 300, 400) nach einem der Ansprüche 6 bis 11, wobei eine vorstehende Länge des Endabschnitts des Einsteckendes (221, 321) von der zweiten Verbindungshülse (232, 332) größer als oder gleich 10 mm ist und/oder wobei Materialien des ersten Rohrkörpers (210, 310, 41) und der ersten Verbindungshülse (231, 331) unterschiedlich sind und/oder Materialien des zweiten Rohrkörpers (220, 320, 42) und der zweiten Verbindungshülse (232, 332) unterschiedlich sind.

13. Rohrleitungsverbindungsstruktur (100, 200, 300, 400) nach Anspruch 12, wobei die erste Verbindungshülse (231, 331) und die zweite Verbindungshülse (232, 332) aus Kupfer oder einer Kupferlegierung hergestellt sind oder wobei der erste Rohrkörper (210, 310, 41) und der zweite Rohrkörper (220, 320, 42) Edelstahlrohre sind.

14. Verdichteranordnung, umfassend einen Verdichter und die Rohrleitungsverbindungsstruktur (100, 200, 300, 400) nach einem der Ansprüche 1 bis 13, oder Klimaanlage, umfassend eine Verdichteranordnung mit einem Verdichter und der Rohrleitungsstruktur nach einem der Ansprüche 1 bis 13.

## Revendications

1. Structure de raccordement de canalisation (100, 200, 300, 400), comportant : un premier corps de tuyau (210, 310, 41) et un deuxième corps de tuyau (220, 320, 42), dans laquelle : le premier corps de tuyau (210, 310, 41) est un premier tuyau en acier (11), et le deuxième corps de tuyau (220, 320, 42) est un deuxième tuyau en acier, le premier tuyau en acier (11) comporte une section supérieure (11A) du premier tuyau en acier (11) et une section inférieure (11B) du premier tuyau en acier (11), et le deuxième tuyau en acier (21) comporte une section supérieure (21A) du deuxième tuyau en acier (21) et une section inférieure (21B) du deuxième tuyau en acier (21) ; et
un ensemble formant manchon de raccordement (230, 330) monté à l'intérieur ou à l'extérieur du premier corps de tuyau (210, 310, 41) et monté à l'extérieur du deuxième corps de tuyau (220, 320, 42), dans laquelle l'ensemble formant manchon de raccordement (230, 330) est relié de manière fixe au premier corps de tuyau (210, 310, 41) et au deuxième corps de tuyau (220, 320, 42) pour que le premier corps de tuyau (210, 310, 41) soit en communication avec le deuxième corps de tuyau (220, 320, 42) ;
dans laquelle l'ensemble formant manchon de raccordement (230, 330) comporte un premier manchon en cuivre (12) et un deuxième manchon en cuivre (22), le premier manchon en cuivre (12) comporte une section supérieure (12A) du premier manchon en cuivre (12) et une section inférieure (12B) du premier manchon en cuivre (12), et le deuxième manchon en cuivre (22) comporte une section supérieure (22A) du deuxième manchon en cuivre (22) et une section inférieure (22B) du deuxième manchon en cuivre (22) ; le premier manchon en cuivre (12) est monté sur la section supérieure (11A) du premier tuyau en acier (11), et la section supérieure (12A) du premier manchon en cuivre (12) s'étend au-delà de la section supérieure (11A) du premier tuyau en acier (11) pour former une première section d'extension ; le deuxième manchon en cuivre (22) est monté sur la section inférieure du deuxième tuyau en acier (21) ; le premier tuyau en acier (11) est soudé au premier manchon en cuivre (12), et le deuxième tuyau en acier (21) est soudé au deuxième manchon en cuivre (22) ; et la première section d'extension du premier manchon en cuivre (12) est montée sur le deuxième manchon en cuivre (22) et est soudée au deuxième manchon en cuivre (22) ;
dans laquelle la section inférieure (22B) du deuxième manchon en cuivre (22) s'étend au-delà de la section inférieure (21B) du deuxième tuyau en acier (21) pour former une deuxième section d'extension ; et
dans laquelle une face d'extrémité de la section inférieure (21B) du deuxième tuyau en acier (21) et la face d'extrémité de la section supérieure (11A) du premier tuyau en acier (11) sont espacées le long d'une direction axiale, la première section d'extension et la deuxième section d'extension sont soudées pour former une zone de chevauchement de soudage le long d'une direction radiale, et la zone de chevauchement de soudage est située entre la face d'extrémité de la section inférieure (21B) du deuxième tuyau en acier (21) et la face d'extrémité de la section supérieure (11A) du premier tuyau en acier (11).

2. Structure de raccordement de canalisation (100, 200, 300, 400) selon la revendication 1, dans laquelle la section supérieure (22A) du deuxième manchon en cuivre (22) s'étend à partir de la section supérieure (12A) du premier manchon en cuivre (12) sur une longueur prédéterminée, ou, dans laquelle le premier tuyau en acier (11) ou le premier manchon en cuivre (12) est un tuyau de diamètre constant ou un tuyau de diamètre variable.

3. Structure de raccordement de canalisation (100, 200, 300, 400) selon la revendication 1, dans laquelle une face d'extrémité de la section inférieure (22B) du deuxième manchon en cuivre (22) est en butée contre ou est espacée d'une face d'extrémité de la section supérieure (11A) du premier tuyau en acier (11), ou, dans laquelle la section inférieure (22B) du deuxième manchon en cuivre (22) s'étend jusque dans le premier tuyau en acier (11).

4. Structure de raccordement de canalisation (100, 200, 300, 400) selon l'une quelconque des revendications 1 à 3, dans laquelle une paroi intérieure du premier tuyau en acier (11) comporte une partie saillante de positionnement (111) servant à arrêter la section inférieure (22B) du deuxième manchon en cuivre (22) et/ou, dans laquelle la section supérieure (11A) du premier tuyau en acier (11) est évasée ou rétrécie.

5. Structure de raccordement de canalisation (100, 200, 300, 400) selon la revendication 1, dans laquelle le premier corps de tuyau (210, 310, 41) a une extrémité de réception (211, 311), le deuxième corps de tuyau (220, 320, 42) a une extrémité d'insertion (221, 321), et l'extrémité d'insertion (221, 321) est insérée jusque dans l'extrémité de réception (211, 311) ; et l'ensemble formant manchon de raccordement (230, 330) est monté sur une position de raccordement entre le premier corps de tuyau (210, 310, 41) et le deuxième corps de tuyau (220, 320, 42), et est relié de manière fixe à une surface extérieure de l'extrémité de réception (211, 311) et à une surface extérieure du deuxième corps de tuyau (220, 320, 42).

6. Structure de raccordement de canalisation (100, 200, 300, 400) selon la revendication 1, dans laquelle l'ensemble formant manchon de raccordement (230, 330) comporte : un premier manchon de raccordement (231, 331) monté sur l'extrémité de réception (211, 311) et faisant saillie à partir d'une partie d'extrémité de l'extrémité de réception (211, 311) ; et un deuxième manchon de raccordement (232, 332) monté sur le deuxième corps de tuyau (220, 320, 42), dans laquelle une partie d'extrémité de l'extrémité d'insertion (221, 321) fait saillie à partir d'une première extrémité du deuxième manchon de raccordement (232, 332), le deuxième manchon de raccordement (232, 332) est inséré au moins partiellement dans le premier manchon de raccordement (231, 331), et le premier manchon de raccordement (231, 331) est relié de manière fixe au deuxième manchon de raccordement (232, 332).

7. Structure de raccordement de canalisation (100, 200, 300, 400) selon la revendication 6, dans laquelle la première extrémité du deuxième manchon de raccordement (232, 332) est en butée contre la partie d'extrémité de l'extrémité de réception (211, 311) et/ou, dans laquelle une longueur faisant saillie de la partie d'extrémité de l'extrémité d'insertion (221, 321) à partir du deuxième manchon de raccordement (232, 332) est supérieure ou égale à 10 mm.

8. Structure de raccordement de canalisation (100, 200, 300, 400) selon la revendication 1, dans laquelle : le premier corps de tuyau (210, 310, 41) a une extrémité de réception (211, 311), le deuxième corps de tuyau (220, 320, 42) a une extrémité d'insertion (221, 321), et l'extrémité d'insertion (221, 321) est insérée jusque dans l'extrémité de réception (211, 311) ; et l'ensemble formant manchon de raccordement (230, 330) comporte : un premier manchon de raccordement (231, 331) inséré dans l'extrémité de réception (211, 311) et relié de manière fixe à celle-ci ; et un deuxième manchon de raccordement monté sur l'extrémité d'insertion (221, 321) et relié de manière fixe à celle-ci, dans laquelle le premier manchon de raccordement (231, 331) est monté sur le deuxième manchon de raccordement (232, 332) et relié de manière fixe à celui-ci, éventuellement, dans laquelle le premier manchon de raccordement (231, 331) fait saillie à partir d'une partie d'extrémité de l'extrémité de réception (211, 311).

9. Structure de raccordement de canalisation (100, 200, 300, 400) selon la revendication 8, dans laquelle le deuxième manchon de raccordement (232, 332) est inséré au moins partiellement dans le premier manchon de raccordement (231, 331).

10. Structure de raccordement de canalisation (100, 200, 300, 400) selon l'une quelconque des revendications 6 à 9, dans laquelle une deuxième extrémité du deuxième manchon de raccordement (232, 332) fait saillie à partir du premier manchon de raccordement (231, 331).

11. Structure de raccordement de canalisation (100, 200, 300, 400) selon l'une quelconque des revendications 6 à 10, dans laquelle une longueur faisant saillie de la deuxième extrémité du deuxième manchon de raccordement (232, 332) à partir du premier manchon de raccordement (231, 331) est supérieure ou égale à 5 mm et/ou, dans laquelle une longueur faisant saillie d'une extrémité du premier manchon de raccordement (231, 331) à partir de l'extrémité de réception (211, 311) est supérieure ou égale à 5 mm.

12. Structure de raccordement de canalisation (100, 200, 300, 400) selon l'une quelconque des revendications 6 à 11, dans laquelle une longueur faisant saillie de la partie d'extrémité de l'extrémité d'insertion (221, 321) à partir du deuxième manchon de raccordement (232, 332) est supérieure ou égale à 10 mm et/ou, dans laquelle les matériaux du premier corps de tuyau (210, 310, 41) et du premier manchon de raccordement (231, 331) sont différents, et/ou les matériaux du deuxième corps de tuyau (220, 320, 42) et du deuxième manchon de raccordement (232, 332) sont différents.

13. Structure de raccordement de canalisation (100, 200, 300, 400) selon la revendication 12, dans laquelle le premier manchon de raccordement (231, 331) et le deuxième manchon de raccordement (232, 332) sont réalisés à partir de cuivre ou d'alliage de cuivre, ou, dans laquelle le premier corps de tuyau (210, 310, 41) et le deuxième corps de tuyau (220, 320, 42) sont des tuyaux en acier inoxydable.

14. Ensemble formant compresseur, comportant un compresseur et la structure de raccordement de canalisation (100, 200, 300, 400) selon l'une quelconque des revendications 1 à 13, ou climatiseur, comportant un ensemble formant compresseur avec un compresseur et la structure de canalisation selon l'une quelconque des revendications 1 à 13.
